# EUROPÄISCHE PATENTSCHRIFT

(11) **EP 3 870 101 B1**
(45) Veröffentlichungstag und Bekanntmachung des Hinweises auf die Patenterteilung: **05.07.2023**
(21) Anmeldenummer: 19765724.0
(22) Anmeldetag: 06.09.2019
(51) Int. Cl.: A61C 15/04

(54) **INTERDENTALINSTRUMENT**
INTERDENTAL INSTRUMENT
INSTRUMENT INTERDENTAIRE

(30) Priorität: 23.10.2018 DE 102018126369
(43) Veröffentlichungstag der Anmeldung: 01.09.2021
(73) Patentinhaber: Edenta Etablissement, 9486 Schaanwald (LI)
(72) Erfinder: GRÄTZ, Oliver, 6900 Bregenz (AT)
(74) Vertreter: Schmid, Nils T.F.
(86) Internationale Anmeldenummer: PCT/EP2019/073894
(87) Internationale Veröffentlichungsnummer: WO 2020/083554

(56) Entgegenhaltungen:
- DE-U1- 9 003 517
- US-A- 4 706 694
- US-A- 5 581 838
- US-A1- 2007 044 815
- US-B2- 8 893 733

## Beschreibung

Die vorliegende Erfindung betrifft ein Interdentalinstrument sowie ein Verfahren zur Herstellung. US 8,893,733 offenbart eine Applikationshilfe für Zahnseide zur interdentalen Behandlung von Patienten. Die Applikationshilfe umfasst einen länglichen Betätigungsarm, an den ein Halter für die Zahnseide lösbar zu befestigen ist. Der Halter umfasst zwei sich gegenüberliegende Spannflanken zum Einspannen der Zahnseide und einen die beiden Flanken miteinander verbindenden Träger. An dem Träger ist eine Befestigungseinrichtung zum lösbaren Verbinden des Halters an dem Betätigungsarm vorgesehen. Die Befestigungseinrichtung weist einen von dem Träger hervorstehenden längs geschlitzten pilzförmigen Zapfen auf, der zur Befestigung des Halters an den Betätigungsarm durch eine darin vorgesehene Durchgangsbohrung hindurch geschoben wird. Des Weiteren umfasst die Befestigungseinrichtung ein an dem Betätigungsarm vorgesehenes Verschlusselement zum Sichern des Zapfens an dem Betätigungsarm. Der Halter ist dabei derart an dem Betätigungsarm montiert, dass eine Mittelachse des Zapfens einer Schwenkachse des Halters relativ zu dem Betätigungsarm entspricht. Dies bedeutet, dass der Halter relativ zu dem Betätigungsarm frei verschwenkt werden kann, um sich so an die jeweiligen Anforderungen der Interdentalräume anzupassen. Nachteilig daran ist, dass aufgrund der freien Positionierbarkeit die tatsächliche Behandlung der Interdentalräume schwierig ist, da der Halter dazu tendiert, während der Behandlung sich relativ zu dem Betätigungsarm zu verschwenken.

Aus diesem Grund ist es bereits aus US 8,893,733 bekannt, eine zusätzliche Einrasteinrichtung sowohl an dem Halter als auch an dem Betätigungsarm anzubringen. Dazu weist der Betätigungsarm an einer dem Zapfenkopf gegenüberliegenden Seite mehrere RastVertiefungen auf, in die entsprechende Rast-Vorsprünge des Halters einrasten können, um vorbestimmte Einrastposition des Halters relativ zu dem Betätigungsarm bereitzustellen. Diese Bauart ist relativ aufwendig und erfordert zum einen die Bauteile der Befestigungseinrichtung, wenigstens den Zapfen und das Verschlusselement, zum Befestigen des Halters an dem Betätigungsarm und zum anderen die Komponenten der Einrasteinrichtung zum Bereitstellen definierter Relativpositionen des Halters bezüglich des Betätigungsarms. Weiter nachteilig an der Ausführungsform gemäß US 8,893,733 ist, dass die Demontage des Halters von dem Betätigungsarm zeitaufwendig und nicht leicht zu handhaben ist. Denn ein Bediener muss zunächst den geringfügig aus der Durchgangsbohrung hervorstehenden Pilzkopf des Zapfens mit einem zusätzlichen benötigten Werkzeug fassen, zusammendrücken und zurück durch die Durchgangsbohrung aus dem Betätigungsarm herausschieben. Eine einfache und leicht zu handhabende Montage ist wichtig, da im Allgemeinen Interdentalwerkzeuge, wie eine Flossette oder ein Abrasivelement, nach einmaliger Benutzung an einem Patienten zumindest gereinigt, d. h. sterilisiert, werden müssen, wozu diese in der Regel demontiert werden müssen. Alternativ kann es unter Umständen notwendig sein, diese auszuwechseln und nicht erneut zu verwenden. Der Betätigungsarm ist nicht notwendigerweise nach jeder Behandlung zu ersetzen und kann mehrfach Anwendung finden, sodass verschiedene Interdentalwerkzeuge einfach und schnell an dem Betätigungsarm zu montieren und zu demontieren sein müssen.

Des Weiteren soll der Zahnseidenhalter aus US 8,893,733 flexibel gestaltet sein, um sich bei Anwendung mit der flexiblen Zahnseide deformieren zu können. Außerdem dient die Flexibilität dazu, je nach Bedarf eine Spannung auf die eingespannte Zahnseide einzustellen. Zur Sicherung des Zapfens an dem Betätigungsarm umgreift das Verschlusselement den Zapfen gabelartig, sodass die Montageflächen von Verschlusselement und Zapfen parallel zur Schwenkachse orientiert sind. Die daraus resultierenden kleinen Montageflächen, die auch zur Kraftübertragung zwischen Verschlusselement und Zapfen dienen, realisieren nur eine instabile beziehungsweise wackelige Anbringung des Halters an dem Betätigungsarm. Eine derartige Befestigung ist ungeeignet für Abrasivelemente, wie Diamantstreifen und Abrasivstreifen.

Eine Aufgabe der vorliegenden Erfindung besteht darin, die Nachteile aus dem Stand der Technik zu überwinden, insbesondere ein stabileres Interdentalinstrument bereitzustellen, das ebenfalls zur Anwendung mit Abrasivelementen geeignet ist sowie einfach und schnell zu montieren und demontieren ist. Zudem liegt der Erfindung die Aufgabe zugrunde, einen Träger für eine Interdentalreinigungsvorrichtung dahingehend zu verbessern, dass der Träger stabiler und zur Anwendung mit Abrasivelementen geeignet ist sowie einfach und schnell an einem Handhabeabschnitt des Interdentalinstruments montierbar und demontierbar ist.

Diese Aufgabe wird durch die Merkmale der unabhängigen Ansprüche 1 und 15 gelöst. Danach umfasst ein Interdentalinstrument einen Handhabeabschnitt zum vorzugsweise manuellen Greifen des Interdentalinstruments. Das Interdentalinstrument kann einen von dem Handhabeabschnitt gehaltenen Träger für ein Interdentalteil, wie eine Flossette oder ein Abrasivelement, beispielsweise einen Abrasiv- oder Diamantstreifen, umfassen. Das Interdentalteil ist an dem Träger angeordnet bzw. anordenbar. Mittels des Handhabeabschnitts kann der Träger mit dem Interdentalteil bedient werden, beispielsweise um eine Interdentalreinigung oder andere Bearbeitungen aus der Zahnmedizin, wie Konturieren, Finieren, Vor- und Hochglanzpolieren interdentaler Flächen, Verringern von Zahnbreiten, Schleifen, Reinigen, Polieren und/oder Vorbehandeln von Zähnen und Füllungen im Interdentalraum, an einem Patienten durchzuführen. Der Träger kann beispielsweise aus einem Metall, vorzugsweise einem rostfreien Stahl, Titan, oder aus einer metallischen Legierung hergestellt sein. Weiter können Kunststoffe, Verbundstoffe, keramische Stoffe oder keramische Verbundstoffe Anwendung finden. Der Handhabeabschnitt kann beispielsweise aus demselben Material wie der Träger hergestellt sein. Beispielsweise kann der Handhabeabschnitt aus Metall, wie rostfreiem Stahl, Titan oder einer metallischen Legierung sowie aus Kunststoff, Verbundstoff, keramischem Stoff oder keramischen Verbundstoffen hergestellt sein. Vorzugsweise sind Materialien für Träger und Handhabeabschnitt auszuwählen, die den Hygienevorschriften im Interdentalbereich entsprechen. Als Normen sind beispielsweise die DIN EN ISO 13402, DIN EN ISO 21530, DIN EN ISO 7153 DIN EN ISO 10271 zu nennen. Die Materialien der Komponenten eines Interdentalinstruments müssen bei mindestens 134°C autoklavierbar und durch handelsübliche Desinfektionsmittel gereinigt und desinfiziert werden können. Ebenso können Materialien verwendet werden, welche nicht autoklavierbar sind, jedoch durch handelsübliche Desinfektionsmittel gereinigt und desinfiziert werden können. Bei der Materialwahl ist vorzugsweise darauf zu achten, ob es sich bei der jeweiligen Komponente bzw. bei jeweiligen Anwendung um einen sogenannten semi-kritischen Einsatz, bei dem die Interdentalbehandlung derart abgehalten wird, dass kein Blutkontakt mit dem jeweiligen Bauteil auftritt, oder um einen sogenannten kritischen Einsatz handelt, bei dem bei der Interdentalbehandlung Blutkontakt an dem entsprechenden Bauteil des Interdentalinstruments auftreten kann. Komponenten des Interdentalinstruments, die für den kritischen Einsatz ausgebildet sind, müssen insbesondere bei mindestens 134°C autoklavierbar und durch handelsübliche Desinfektionsmittel gereinigt bzw. desinfiziert werden können. Bei dem semi-kritischen Einsatz ist die Autoklavierbarkeit bei mindestens 134°C nicht zwingend erforderlich, sodass eine Reinigung bzw. Desinfektion mit handelsüblichen Desinfektionsmitteln ausreichend ist. Es ist außerdem möglich, dass der Handhabeabschnitt und der Träger aus einem Stück hergestellt sind, beispielsweise mittels eines Spritzgussverfahrens oder aus einem Vollmaterial gefertigt.

Bei dem Interdentalteil kann es sich um ein Abrasivelement, wie ein Abrasivstreifen oder ein Diamantstreifen, handeln. Das Interdentalteil bzw. das Abrasivelement ist dauerhaft oder lösbar an dem Träger angeordnet. Das Interdentalteil und/oder das Abrasivelement ist mittels eines Spritzgussverfahrens hergestellt. Es ist auch denkbar, dass das Abrasivelement beispielsweise mit dem Träger in einem Zweikomponenten-Spritzgussverfahren hergestellt ist. Beispielhafte Materialien für das Abrasivelement sind korrosionsfestes Metall, zum Beispiel Edelstahl, oder auch Kunststoffe. Die Diamantierung der Diamantstreifen kann Diamantierungskörnungen im Bereich zwischen 5 µm und 200 µm Korndurchmesser aufweisen. Es ist möglich, die Diamantierung einseitig oder beidseitig des Abrasivelements vorzusehen. Beispielsweise können der Träger und/oder das Abrasivelement eine Anzeigeeinrichtung aufweisen, anhand welcher ablesbar bzw. erkennbar ist, an welcher Seite bzw. Fläche des Abrasivelements die Körnung bzw. Diamantierung vorgesehen ist. Dadurch wird ein schnelles Identifizieren der entsprechenden benötigten Behandlungsseite des Abrasivelements gewährleistet sowie eine Fehlanwendung des Abrasivelements verhindert. Bei manchen Abrasivelementen ist eine derartige Anzeigeeinrichtung sogar erforderlich, da mit blo-βem Auge nicht erkennbar ist, an welcher Seite die Körnung bzw. Diamantierung an dem Abrasivelement sich befindet. Beispielsweise kann es sich bei der Anzeigeeinrichtung um eine farbliche und/oder strukturelle Anzeigeeinrichtung handeln. In einem in Längserstreckungsrichtung betrachteten Mittelabschnitt des Abrasivelements kann eine diamantierungsfreie Zone ausgebildet sein. Ferner sind in der Regel die beiden gegenüberliegenden, sich entlang der Längserstreckung des Abrasivelements ausbildenden Abrasivkanten ohne eine Diamantierung ausgebildet. Somit ist eine Herstellung der Abrasiv- bzw. Diamantstreifen aus einem bereits diamantierten Metallband durch Abschneiden quer zur Längserstreckung des Metallbands möglich, wobei beispielsweise Laser- oder mechanische Schneideinrichtungen Anwendung finden. Als Abrasivbeschichtungen an den Abrasivelementen können auch Schleifmittel, wie beispielsweise Aluminiumoxid, Siliziumkarbid oder Keramikmaterialien, eingesetzt werden. Des Weiteren ist es denkbar, den Abrasivstreifen derart an der Oberfläche auszubilden, dass die Abrasivwirkung über die Oberflächenrauhigkeit erzielt wird. Des Weiteren ist es denkbar, den Abrasiv- bzw. Diamantstreifen diamantierungs- bzw. abrasivfrei auszuführen und an wenigstens einer Abrasivkante eine Verzahnung, wie eine Sägeverzahnung, vorzusehen. Eine zykloidische bzw. wellige Form der Abrasivkanten kann ebenfalls vorgesehen sein. Des Weiteren ist es denkbar, den Abrasiv- bzw. Diamantstreifen an wenigstens einer Abrasivkante mit einer Verzahnung, wie einer Sägeverzahnung, vorzusehen. Eine zykloidische bzw. wellige Form der Abrasivkanten kann ebenfalls vorgesehen sein. Es ist außerdem möglich, dass das Abrasivelement aus rostfreiem Stahl, insbesondere aus einem rostfreien Stahlstreifen, hergestellt ist und/oder Öffnungen, wie mechanische Ausbuchtungen, an der Oberfläche besitzt, wobei insbesondere das Abrasivelement die Struktur einer Reibe, Raspel oder Raffel aufweist. Zur schnellen Identifikation der jeweiligen Körnungen an den entsprechenden Abrasivelementen für einen Benutzer können die Abrasivelemente mit einer Farbmarkierung, wie Farbstrich(e), Farbpunkt(e) oder andere beliebige Formen, markiert werden und/oder der Träger eine farbige Oberfläche aufweisen, die eine Farbkodierung zur Kennzeichnung der verschiedenen Körnungen darstellt. Beispielsweise liegt eine in Längserstreckungsrichtung gemessene Gesamtbreite des Abrasivelements im Bereich von 5 mm bis 35 mm, vorzugsweise im Bereich von 10 bis 35 mm, vorzugsweise im Bereich von 15 bis 35 mm, vorzugsweise im Bereich von 20 mm bis 30 mm, insbesondere liegt die Breite bei etwa 25 mm. Eine quer zur Längserstreckungsrichtung gemessene Gesamthöhe des Abrasivelements kann beispielsweise im Bereich von 2 mm bis 8 mm, vorzugsweise im Bereich von 3 mm bis 7 mm oder im Bereich von 4 mm bis 6 mm, liegen.

An dem Interdentalinstrument ist eine Gelenkeinrichtung zum schwenkbeweglichen Halten des Trägers an dem Handhabeabschnitt vorgesehen. Der Träger ist dabei derart schwenkbeweglich an dem Handhabeabschnitt gehalten, dass der Träger relativ zu dem

Handhabeabschnitt um eine Schwenkachse verschwenkbar ist. Wenigstens zwei zueinander winkelversetzte Haltepositionen des Trägers sind relativ zu dem Handhabeabschnitt gebildet, zwischen denen der Träger relativ zu dem Handhabeabschnitt verschwenkbar ist. Der Winkelversatz zwischen den wenigstens zwei Haltepositionen ist vorzugsweise durch die Schwenkachse bestimmt. Insbesondere spannen die wenigstens zwei zueinander winkelversetzten Haltepositionen zwischen sich einen Winkelsektor auf, innerhalb dem der Träger relativ zu dem Handhabeabschnitt um die Schwenkachse verschwenkbar ist. Die Gelenkeinrichtung weist ferner zwei sich einander gegenüberliegende Gleitführungsflächen auf. Die Gleitführungsflächen sind trägerseitig und handhabeabschnittseitig ausgebildet. Die Gleitführungsflächen dienen dazu, den Träger während des Verschwenkens bezüglich des Handhabeabschnitts um die Schwenkachse zu führen, um ein sicheres, gleichmäßiges und definiertes Verschwenken zu gewährleisten. Die Gleitführungsflächen sind außerdem derart trägerseitig und handhabeabschnittseitig angeordnet, dass die trägerseitigen Gleitführungsflächen und die handhabeabschnittseitigen Führungsflächen an den jeweils gegenüberliegenden Gleitführungsflächen, der jeweils anderen Komponente aufliegen.

Gemäß einer beispielhaften Ausführung der Erfindung sind die Haltepositionen durch Haltepositionsnuten oder Haltepositionsvorsprünge realisiert. Die Haltepositionsnuten können dabei durch Vertiefungen in den Gleitführungsflächen gebildet sein. Die Haltepositionsvorsprünge können beispielsweise durch von den Gleitführungsflächen vorstehende, insbesondere parallel, vorzugsweise koaxial, zur Schwenkachse vorstehende, Nasen gebildet sein.

In einer weiteren beispielhaften Ausführung besitzt die Gelenkeinrichtung wenigstens zwei in Richtung der Schwenkachse zueinander versetzt und/oder zueinander parallel angeordnete Gleitführungsflächenpaare. Jedes Flächenpaar bildet sich durch jeweils eine Gleitführungsfläche des Handhabeabschnitts und eine Gleitführungsfläche des Trägers, insbesondere eine sogenannte Führungsgegenfläche des Trägers.

Der Träger oder der Handhabeabschnitt kann zur Bildung des Doppelflächenpaars eine Gabelstruktur mit zwei Zinken aufweisen, wobei die Innen- bzw. die Außenseite der Zinken jeweils eine Führungsgegenfläche bzw. Gleitführungsfläche bildet, je nachdem, ob der Handhabeabschnitt oder der Träger die Gabelstruktur aufweist. Aufgrund der Gabelstruktur bildet sich ein Freiraum zwischen den zwei sich insbesondere parallel zueinander erstreckenden Zinken, in den der Träger, insbesondere ein scheibenförmiger Abschnitt des Trägers, bzw. der Handhabeabschnitt, je nachdem, ob der Handhabeabschnitt oder der Träger die Gabelstruktur aufweist, einfahren kann. Beim Ineinandereinfahren von Träger und Handhabeabschnitt können zwei einander zugewandte Gleitführungsflächen, insbesondere eine Gleitführungsfläche des Handhabeabschnitts und eine Führungsgegenfläche des Trägers, aneinander entlang einer im Wesentlichen quer, vorzugsweise senkrecht, zur Schwenkachse orientierten Montagerichtung gleiten.

Gemäß Erfindung bildet der Träger die Gabelstruktur, die zwischen den beiden in Axialrichtung der Schwenkachse versetzt angeordneten Zinken einen scheibenförmigen Gelenkabschnitt des Handabschnitts aufnimmt, und zwischen ihnen verspannt. Auf diese Weise kann sich eine geteilte Schwenkachse bilden, bei der zwei voneinander in Axialrichtung getrennte Schwenkpunkte realisiert sind. Diese Schwenkpunkte werden insbesondere durch Vorsprünge oder Führungsnasen, die später beschrieben werden, gebildet, die insbesondere in der Führungsgegenfläche und/oder Gleitführungsfläche eingebracht sind oder von diesen hervorstehen.

Gemäß Erfindung kreuzt die Schwenkachse die Gleitführungsflächen. Es ergibt sich dadurch ein besonders stabiles Interdentalinstrument, bei dem insbesondere ein Wackeln bzw. Nackeln des Trägers bezüglich des Handhabeabschnitts vermieden ist. Vorzugsweise steht die Schwenkachse lotrecht auf den zwei Gleitführungsflächen, insbesondere in einem Winkel von 75° bis 105°, 80° bis 100° oder 85° bis 95°.

Die zwei Gleitführungsflächen sind plan ausgebildet. Die beiden Gleitführungsflächen können alternativ oder zusätzlich zueinander parallel verlaufen, vorzugsweise planparallel ausgebildet sein. Die zwei Gleitführungsflächen sind unter einer Spreizklemmung oder einer Kompressionsklemmung mit zwei gegenüberliegenden Führungsgegenflächen des Trägers bzw. des Handhabeabschnitts verspannt. Diese geometrischen Ausgestaltungen der Gleitführungsflächen und die zusätzliche Verklemmung mit Führungsgegenflächen verbessert zudem die Stabilität des erfindungsgemäßen Interdentalinstruments.

Die zwei sich gegenüberliegenden Gleitführungsflächen sind an einem Ende des als Stab ausgebildeten Handhabeabschnitts angeordnet. Vorzugsweise ist der Handhabeabschnitt als länglicher Gegenstand ausgebildet, dessen Erstreckung in Stablängsrichtung deutlich größer ist als dessen Erstreckung in die beiden weiteren Raumrichtungen, insbesondere zueinander und bezüglich der Stablängsrichtung senkrecht orientierten weiteren Raumrichtungen.

Die zwei sich gegenüberliegenden Gleitführungsflächen sind an beiden Enden des als Stab ausgebildeten Handhabeabschnitts angeordnet. Zusätzlich können die zwei Gleitführungsflächen an dem Handhabeabschnitt ausgebildet sein, wobei entlang der Gleitführungsflächen ein Führungsgegenstück des Trägers beim Verschwenken des Trägers bezüglich des Handhabeabschnitts um die Schwenkachse gleitet. Insbesondere weist das Führungsgegenstück zwei sich gegenüberliegende Führungsflächen auf. Diese Führungsgegenflächen stehen im gleitenden Eingriff mit der jeweiligen Gleitführungsfläche, um während des Verschwenkens des Trägers relativ zu dem Handhabeabschnitt aneinander zu gleiten, um vorzugsweise eine geführte und/oder stabile Schwenkbarkeit des Trägers bezüglich des Handhabeabschnitts zuzulassen. Die zwei Gleitführungsflächen können auch an dem Träger ausgebildet sein, die mit zwei Führungsgegenflächen, welche dann an dem Handhabeabschnitt ausgebildet sind, beim Verschwenken des Trägers relativ zu dem Handhabeabschnitt um die Schwenkachse im gleitenden Eingriff stehen. Vorzugsweise sind die Gleitführungsflächen und/oder die Führungsgegenflächen jeweils identisch ausgebildet und/oder weisen jeweils in entgegengesetzte Richtungen, wobei insbesondere die Flächennormalenvektoren der Gleitführungsflächen zueinander parallel orientiert sind und/oder die Flächennormalenvektoren der Führungsgegenflächen zueinander parallel orientiert sind.

In einer beispielhaften Ausführung des erfindungsgemäßen Interdentalinstruments sind die Gleitführungsflächen und die Führungsgegenflächen nicht plan und/oder nicht parallel zueinander orientiert. Beispielsweise sind die Gleitführungsflächen und die Führungsgegenflächen aufeinander formabgestimmt. Die Gleitführungsflächen können zumindest bereichsweise eine konkave Struktur bzw. Kontur und die Führungsgegenflächen zumindest bereichsweise eine konvexe Struktur bzw. Kontur besitzen, oder umgekehrt.

Die zwei Gleitführungsflächen und die zwei, jeweils mit einer der Gleitführungsflächen sind im gleitenden Eingriff stehenden und/oder verspannten Führungsgegenflächen von der Schwenkachse gekreuzt. Die Schwenkachse kann beispielsweise lotrecht oder in einem Winkel im Bereich von 75° bis 105°, 80° bis 100° oder 85° bis 95° auf den zwei Gleitführungsflächen und den zwei Führungsgegenflächen stehen.

In einer weiteren beispielhaften Ausführung des erfindungsgemäßen Interdentalinstruments sind die zwei Gleitführungsflächen und die zwei Führungsgegenflächen gegeneinander vorgespannt, vorzugsweise elastisch gegeneinander vorgespannt. Die Vorspannung ist vorzugsweise derart ausgebildet, dass eine Schwenkbeweglichkeit des Trägers relativ zu dem Handhabeabschnitt um die Schwenkachse nur in einer Schwenkebene realisiert ist. Die Schwenkebene wird durch die zwei Gleitführungsflächen und die zwei Führungsgegenflächen definiert. Die elastische Vorspannung erhöht zudem die Stabilität des erfindungsgemäßen Interdentalinstruments und kann ein geführtes, stabiles Verschwenken des Trägers relativ zu dem Handhabeabschnitt gewährleisten.

In einer beispielhaften Ausführung der Erfindung weist der Handhabeabschnitt eine Längserstreckungsrichtung auf, die im Wesentlichen parallel zu den zwei Gleitführungsflächen ausgerichtet ist und insbesondere ist die Längserstreckungsrichtung des Handhabeabschnitts parallel zu den zwei Führungsgegenflächen ausgerichtet. Im Wesentlichen parallel kann dabei derart verstanden werden, dass ein Winkel von weniger als 20° der Längserstreckungsrichtung bezüglich der ebenen Führungsflächen und/oder Führungsgegenflächen gebildet sein kann.

In einer beispielhaften Weiterbildung des erfindungsgemäßen Interdentalinstruments weist die Gelenkeinrichtung zusätzlich jeweils eine Verrastung für jede Halteposition des Trägers an dem Handhabeschnitt auf. Vorzugsweise wird dadurch erreicht, dass der Träger zuverlässig während der Anwendung des Interdentalinstruments an dem Handhabeabschnitt gehalten ist. Insbesondere ist beim Schwenken des Trägers in eine Halteposition ein Rastwiderstand zu überwinden, der insbesondere den Träger ortsfest bezüglich des Handhabeabschnitts in der Halteposition hält. Beispielsweise kann die Verrastung durch ein oder mehrere Rastnasen und eine oder mehrere, vorzugsweise formkomplementär ausgebildete, Rastvertiefungen gebildet sein. Ferner können die Rastnasen und die Rastvertiefungen auf die Schwenkbewegung abgestimmt sein, vorzugsweise bezüglich der Schwenkachse derart orientiert sein, dass die Rastnasen während des Verschwenkens aus den Rastvertiefungen sich herausbewegen und/oder sich in die Rastvertiefungen hineinbewegen können. Gemäß einer Weiterbildung der Erfindung ist die wenigstens eine Rastnase und/oder die wenigstens eine Rastvertiefung in der jeweiligen Gleitführungsfläche und ggf. in der Führungsgegenfläche ausgebildet. Dadurch ergibt sich vorzugsweise eine besonders einfache und zugleich stabile Bauweise des erfindungsgemäßen Interdentalinstruments. Des Weiteren ist ein Verschwenken und Verrasten des Trägers bezüglich des Handhabeabschnitts bzw. an dem Handhabeabschnitt erleichtert.

Gemäß erfindungsgemäßen Interdentalinstruments weist ein freies Ende des Handhabeabschnitts, vorzugsweise weisen beide insbesondere freie Enden des Handhabeabschnitts, eine Scheibenform auf. Beispielsweise beträgt ein Scheibendurchmesser zwischen 1 mm und 20 mm, insbesondere zwischen 5 mm und 15 mm, vorzugsweise zwischen 7,5 mm und 12,5 mm. Eine Scheibenhöhe, wie eine Scheibenmaterialstärke kann im Bereich von 2 mm bis 10 mm, vorzugsweise im Bereich von 3 mm bis 8 mm, vorzugsweise im Bereich von 4 mm bis 6 mm, liegen. Die sich gegenüberliegenden ebenen Flächen der Scheibe bildlen die zwei Gleitführungsflächen, wobei insbesondere die vollständigen, sich gegenüberliegenden ebenen Scheibenflächen die Gleitführungsflächen bilden. Beispielsweise kann ein Umfangsrand des scheibenförmigen Endes kreisförmig ausgebildet sein und/oder mit Rastnasen und/oder mit Rastvertiefungen vorgesehen sein. Beispielsweise können die Rastnasen und/oder Rastvertiefungen den wenigstens zwei zueinander winkelversetzten Haltepositionen des Trägers bezüglich des Handhabeabschnitts zugeordnet sein.

Im erfindungsgemäßen Interdentalinstruments weist der Träger zwei sich insbesondere parallel zueinander erstreckende Klemmarme auf. Die Klemmarme sind derart miteinander verbunden, dass zwischen den Klemmarmen ein Spannraum gebildet ist. Der Spannraum ist dabei derart geformt, derart dimensioniert, dass das scheibenförmige Ende des Handhabeabschnitts in den Spannraum einschiebbar ist. Vorzugsweise ist das scheibenförmige Ende des Handhabeabschnitts unter elastischer Verformung des Trägers, insbesondere der Klemmarme, in den Spannraum einschiebbar. Insbesondere sind Seitenbereiche der Spannarme, die den Gleitführungsflächen des scheibenförmigen Endes zugewandt sind, mit Verrastungselementen versehen, die mit Verrastungsgegenelementen an den Führungsgegenflächen zusammenwirken.

Gemäß einem weiteren Aspekt der Erfindung, der mit den vorherigen kombinierbar ist, umfasst ein erfindungsgemäßes Interdentalinstrument einen Handhabeabschnitt zum manuellen Greifen des Interdentalinstruments durch eine Bedienperson. Ferner umfasst das Interdentalinstrument einen von dem Handhabeabschnitt gehaltenen Träger, an dem ein Interdentalteil, wie eine Flossette oder ein Abrasivelement, zur Behandlung der Interdentalräume an einem Patienten, beispielsweise ein Abrasivstreifen oder ein Diamantstreifen, angeordnet ist. Eine Gelenkeinrichtung ist zum schwenkbeweglichen Halten des Trägers an dem Handhabeabschnitt vorgesehen. Die Gelenkeinrichtung ist derart vorgesehen, dass der Träger relativ zu dem Handhabeabschnitt um eine Schwenkachse zwischen wenigstens zwei zueinander winkelversetzten Haltepositionen schwenkbar ist. Der Träger kann beispielsweise aus einem Metall, vorzugsweise einem rostfreien Stahl, Titan, oder aus einer metallischen Legierung hergestellt sein. Weiter können Kunststoffe, Verbundstoffe, keramische Stoffe oder keramische Verbundstoffe Anwendung finden. Der Handhabeabschnitt kann beispielsweise aus demselben Material wie der Träger hergestellt sein. Beispielsweise kann der Handhabeabschnitt aus Metall, wie rostfreiem Stahl, Titan oder einer metallischen Legierung sowie aus Kunststoff, Verbundstoff, keramischem Stoff oder keramischen Verbundstoffen hergestellt sein. Vorzugsweise sind Materialien für Träger und Handhabeabschnitt auszuwählen, die den Hygienevorschriften im Interdentalbereich entsprechen. Als Normen sind beispielsweise die DIN EN ISO 13402, DIN EN ISO 21530, DIN EN ISO 7153, DIN EN ISO 10271 zu nennen. Die Materialien der Komponenten eines Interdentalinstruments müssen bei mindestens 134°C autoklavierbar und durch handelsübliche Desinfektionsmittel gereinigt und desinfiziert werden können. Ebenso können Materialien verwendet werden, welche nicht autoklavierbar sind, jedoch durch handelsübliche Desinfektionsmittel gereinigt und desinfiziert werden können. Bei der Materialwahl ist vorzugsweise darauf zu achten, ob es sich bei der jeweiligen Komponente bzw. bei jeweiligen Anwendung um einen sogenannten semi-kritischen Einsatz, bei dem die Interdentalbehandlung derart abgehalten wird, dass kein Blutkontakt mit dem jeweiligen Bauteil auftritt, oder um einen sogenannten kritischen Einsatz handelt, bei dem bei der Interdentalbehandlung Blutkontakt an dem entsprechenden Bauteil des Interdentalinstruments auftreten kann. Komponenten des Interdentalinstruments, die für den kritischen Einsatz ausgebildet sind, müssen insbesondere bei mindestens 134°C autoklavierbar und durch handelsübliche Desinfektionsmittel gereinigt bzw. desinfiziert werden können. Bei dem semi-kritischen Einsatz ist die Autoklavierbarkeit bei mindestens 134°C nicht zwingend erforderlich, sodass eine Reinigung bzw. Desinfektion mit handelsüblichen Desinfektionsmitteln ausreichend ist.

Bei dem Interdentalteil kann es sich um ein Abrasivelement, wie ein Abrasivstreifen oder ein Diamantstreifen, handeln. Das Interdentalteil bzw. das Abrasivelement ist dauerhaft oder lösbar an dem Träger angeordnet. Es ist auch denkbar, dass das Abrasivelement beispielsweise mit dem Träger in einem Zweikomponenten-Spritzgussverfahren hergestellt ist. Beispielhafte Materialien für das Abrasivelement sind korrosionsfestes Metall, zum Beispiel Edelstahl, oder auch Kunststoffe. Die Diamantierung der Diamantstreifen kann Diamantierungskörnungen im Bereich zwischen 5 µm und 200 µm Korndurchmesser aufweisen. Es ist möglich, die Diamantierung einseitig oder beidseitig des Abrasivelements vorzusehen. Beispielsweise können der Träger und/oder das Abrasivelement eine Anzeigeeinrichtung und/oder eine Farbmarkierung aufweisen, anhand welcher ablesbar bzw. erkennbar ist, an welcher Seite bzw. Fläche des Abrasivelements die Körnung bzw. Diamantierung vorgesehen ist. Dadurch wird ein schnelles Identifizieren der entsprechenden benötigten Behandlungsseite des Abrasivelements gewährleistet sowie eine Fehlanwendung des Abrasivelements verhindert. Bei manchen Abrasivelementen ist eine derartige Anzeigeeinrichtung sogar erforderlich, da mit bloßem Auge nicht erkennbar ist, an welcher Seite die Körnung bzw. Diamantierung an dem Abrasivelement sich befindet. Beispielsweise kann es sich bei der Anzeigeeinrichtung um eine farbliche und/oder strukturelle Anzeigeeinrichtung handeln. In einem in Längserstreckungsrichtung betrachteten Mittelabschnitt des Abrasivelements kann eine diamantierungsfreie Zone ausgebildet sein. Ferner sind in der Regel die beiden gegenüberliegenden, sich entlang der Längserstreckung des Abrasivelements ausbildenden Abrasivkanten ohne eine Diamantierung ausgebildet. Somit ist eine Herstellung der Abrasiv- bzw. Diamantstreifen aus einem bereits diamantierten Metallband durch Abschneiden quer zur Längserstreckung des Metallbands möglich, wobei beispielsweise Laser- oder mechanische Schneideinrichtungen Anwendung finden. Als Abrasivbeschichtungen an den Abrasivelementen können auch Schleifmittel, wie beispielsweise Aluminiumoxid, Siliziumkarbid oder Keramikmaterialien, eingesetzt werden. Des Weiteren ist es denkbar, den Abrasivstreifen derart an der Oberfläche auszubilden, dass die Abrasivwirkung über die Oberflächenrauhigkeit erzielt wird. Des Weiteren ist es denkbar, den Abrasiv- bzw. Diamantstreifen diamantierungs- bzw. abrasivfrei auszuführen und an wenigstens einer Abrasivkante eine Verzahnung, wie eine Sägeverzahnung, vorzusehen. Eine zykloidische bzw. wellige Form der Abrasivkanten kann ebenfalls vorgesehen sein. Des Weiteren ist es denkbar, den Abrasiv- bzw. Diamantstreifen an wenigstens einer Abrasivkante mit einer Verzahnung, wie einer Sägeverzahnung, vorzusehen. Eine zykloidische bzw. wellige Form der Abrasivkanten kann ebenfalls vorgesehen sein. Es ist außerdem möglich, dass das Abrasivelement aus rostfreiem Stahl, insbesondere aus einem rostfreien Stahlstreifen, hergestellt ist und/oder Öffnungen, wie mechanische Ausbuchtungen, an der Oberfläche besitzt, wobei insbesondere das Abrasivelement die Struktur einer Reibe, Raspel oder Raffel aufweist. Zur schnellen Identifikation der jeweiligen Körnungen an den entsprechenden Abrasivelementen für einen Benutzer können die Abrasivelemente mit einer Farbmarkierung, wie Farbstrich(e), Farbpunkt(e) oder andere beliebige Formen, markiert werden und/oder der Träger eine farbige Oberfläche aufweisen, die eine Farbkodierung zur Kennzeichnung der verschiedenen Körnungen darstellt. Beispielsweise liegt eine in Längserstreckungsrichtung gemessene Gesamtbreite des Abrasivelements im Bereich von 15 mm bis 35 mm, vorzugsweise im Bereich von 20 mm bis 30 mm, insbesondere liegt die Breite bei etwa 25 mm. Eine quer zur Längserstreckungsrichtung gemessene Gesamthöhe des Abrasivelements kann beispielsweise im Bereich von 2 mm bis 8 mm, vorzugsweise im Bereich von 3 mm bis 7 mm oder im Bereich von 4 mm bis 6 mm, liegen.

An dem Interdentalinstrument ist eine Gelenkeinrichtung zum schwenkbeweglichen Halten des Trägers an dem Handhabeabschnitt vorgesehen. Der Träger ist dabei derart schwenkbeweglich an dem Handhabeabschnitt gehalten sein, dass der Träger relativ zu dem Handhabeabschnitt um eine Schwenkachse verschwenkbar ist. Wenigstens zwei zueinander winkelversetzte Haltepositionen des Trägers sind relativ zu dem Handhabeabschnitt gebildet, zwischen denen der Träger relativ zu dem Handhabeabschnitt verschwenkbar ist. Der Winkelversatz zwischen den wenigstens zwei Haltepositionen ist durch die Schwenkachse bestimmt. Die wenigstens zwei zueinander winkelversetzten Haltepositionen spannen zwischen sich einen Winkelsektor auf, innerhalb dem der Träger relativ zu dem Handhabeabschnitt um die Schwenkachse verschwenkbar ist Gemäß dem zweiten Aspekt der Erfindung weist die Gelenkeinrichtung einen Montage-/Demontagemechanismus auf, welcher das Montieren des Trägers an einer einzigen vorbestimmten Einschiebeposition entlang einer linearen Montagerichtung zulässt. Vorzugsweise ist die einzige vorbestimmte Einschiebeposition an dem Träger und/oder an dem Handhabeabschnitt ausgebildet. Beispielsweise kann die vorbestimmte Einschiebeposition beidseitig an dem Träger und/oder an dem Handhabeabschnitt vorgesehen sein. Vorzugsweise handelt es sich bei der Montagerichtung um eine ausschließlich lineare Bewegung während der Montage des Trägers an dem Handhabeabschnitt. Bei Erreichen der Einschubmontageposition, vorzugsweise also dann, wenn der Träger derart auf den Handhabeabschnitt aufgeschoben bzw. derart in den Handhabeabschnitt eingeschoben ist, dass der Träger eine Montageendposition einnimmt, über die hinaus der Träger relativ zu dem Handhabeabschnitt nicht verschiebbar ist, ist ausschließlich ein Schwenkbewegungsfreiheitsgrad um die Schwenkachse und ein Demontieren des Trägers entgegengesetzt der linearen Montagerichtung zugelassen. Zum einen gewährleistet die vordefinierte und nur in einer Richtung mögliche Montage- und Demontagerichtung eine einfache und leicht zu handhabende Montage bzw. Demontage des Interdentalinstruments. Zum anderen gewährleistet die vordefinierte Montage- und Demontagerichtung sowie die Tatsache, dass in der Einschubmontageposition ausschließlich ein Schwenkbewegungsfreiheitsgrad um die Schwenkachse und ein Demontieren entgegengesetzt der Montagerichtung, also in Demontagerichtung, zugelassen ist, dass ein besonders stabiles Interdentalinstrument bereitgestellt ist. Außerdem wird vermieden, dass während der Benutzung des Interdentalinstruments der Träger unerwünscht von dem Handhabeabschnitt heruntergeschoben wird.

Zulassen/zugelassen bedeutet, dass die entsprechenden Komponenten derart ausgebildet sind, dass die jeweilige Bewegungsmöglichkeit besteht, während Bewegungen in anderen Richtungen unterbunden beziehungsweise blockiert sind. Insbesondere ist der Montage-/Demontagemechanismus so gebildet, dass der Träger an der vorbestimmten Einschiebeposition nur entlang der linearen Montagerichtung montiert werden kann und dass eine Bewegung des Trägers an der vorbestimmten Einschiebeposition in einer anderen Richtung als der linearen Montagerichtung verhindert ist. In einer bevorzugten Ausführung kann der Träger in der Einschubmontageposition ausschließlich um die Schwenkachse rotiert und ausschließlich entgegengesetzt der linearen Montagerichtung demontiert werden, während andere Bewegungen des Trägers relativ zu dem Handhabeabschnitt unterbunden bzw. blockiert sind.

In einer beispielhaften Ausführung des erfindungsgemäßen Interdentalinstruments ist die lineare Montagerichtung des Trägers bezüglich des Handhabeabschnitts durch eine sich hin zur Montageposition verjüngende Materialaussparung realisiert. Die Materialaussparung kann beispielsweise eine V-Form besitzen und/oder an dem Handhabeabschnitt ausgebildet sein. Vorzugsweise ist die Materialaussparung an einem vorzugsweise scheibenförmigen Ende des Handhabeabschnitts realisiert. Gemäß einer Weiterbildung der Erfindung greift in die Materialaussparung eine Montagenase beim Einschieben in die Einschubmontageposition, wie eine Haltemontageposition, ein. Vorzugsweise ist die Montagenase an dem Träger angeordnet, wobei sie auch an dem Handhabeabschnitt angeordnet sein kann. Es ist klar, dass in Abhängigkeit von der Positionierung der Montagenase die Materialaussparung anzuordnen ist. Beispielsweise können die Materialaussparung und die Montagenase zueinander formkomplementär dimensioniert sein.

Gemäß einer beispielhaften Ausführung des Interdentalinstruments gelangt die in die Materialaussparung eingreifende Führungsnase bei Erreichen der Einschubmontageposition in eine Gelenkaussparung. Diese kann beispielsweise schalenförmig, kegelstumpfförmig oder kegelförmig ausgebildet sein. Vorzugsweise rastet die Führungsnase in die Materialaussparung ein, so dass insbesondere die Schwenkbewegung des Trägers relativ zu dem Handhabeabschnitt um die Schwenkachse festgelegt ist, welche dann vorzugsweise durch die Gelenksaussparung verläuft. Vorzugsweise ist zum Demontieren des Trägers von dem Handhabeabschnitt zunächst die aufgrund der Verrastung zwischen Führungsnase und Materialaussparung resultierende Verrastkraft zu überwinden, bevor der Träger entlang der linearen Demontagerichtung demontierbar ist. Vorzugsweise verlässt der Träger während einer Schwenkbewegung relativ zu dem Handhabeabschnitt die Einschubmontageposition nicht. Beispielsweise kann die in die Materialaussparung eingreifende Führungsnase während einer Schwenkbewegung des Trägers relativ zu dem Handhabeabschnitt entlang der Materialaussparung gleiten, wodurch vorzugsweise der Träger während des Verschwenkens an dem Handhabeabschnitt zusätzlich abgestützt ist.

Gemäß einer beispielhaften Ausführung ist die Materialaussparung rampenartig ausgebildet. Insbesondere leitet die Materialaussparung die Führungsnase während der Montage des Trägers an den Handhabeabschnitt kontinuierlich in Richtung der Gelenkaussparung. Die als Einfahr- bzw. Auffahrrampe gebildete Materialaussparung kann eine bezüglich der linearen Montagerichtung geneigte Oberfläche besitzen, entlang der die Führungsnase geführt wird. Während dem Einfahren bzw. Auffahren nimmt eine der Bewegung entgegenwirkende Widerstandskraft, insbesondere Reibungskraft, kontinuierlich zu. Unmittelbar vor Erreichen der Gelenkaussparung, in die die Führungsnase bei einem Weiterfahren einrastet insbesondere aufgrund dessen bezüglich des Rampenendes reduzierter Höhe, ist eine maximale Widerstandskraft erreicht.

Entlang der Einfahr- bzw. Auffahrrampe sind zwei gegenüberliegende, seitliche Führungswände gebildet, die die Rampe seitlich begrenzen und/oder ein seitliches Verlassen der Rampe durch die Führungsnase quer zur linearen Montagerichtung verhindern. Insbesondere bei der V-förmigen Struktur der Materialaussparung, bzw. der Rampe, unterstützen die seitlichen Führungswände dass gezielte Auffahren auf der Rampe und gezielte Einfahren in die Gelenkaussparung.

Beispielsweise können Führungsnasen an den Zinken der Gabelstruktur des Trägers angeordnet sein. Des Weiteren können die Zinken während der Montage verspannt werden. Insbesondere werden die Zinken derart elastisch gegeneinander verspannt, dass eine Deformationsrückstellkraft von den Zinken, insbesondere den Führungsnasen, auf den Handhabeabschnitt, insbesondere die Einfahr- bzw. Auffahrrampe, ausgeübt wird. Gemäß einer beispielhaften Weiterbildung ist die Materialaussparung, insbesondere die Einfahr- bzw. Auffahrrichtung entlang der Rampe, in Längserstreckungsrichtung des Handhabeabschnitts orientiert. Beispielweise ist die Materialaussparung in dem scheibenförmigen Gelenkabschnitt des Handhabeabschnitts ausgebildet und/oder in einer 12-Uhr oder 6-Uhr Stellung orientiert. Gemäß einer beispielhaften Weiterbildung ist eine weitere Materialaussparung, die insbesondere entsprechend der obigen Materialaussparung gebildet ist, an einer gegenüberliegenden Seite des Handhabeabschnitts, insbesondere des scheibenförmigen Gelenkabschnitts vorgesehen. Beispielsweise können die Materialaussparungen an einer in Schwenkrichtung weisenden Unter- und Oberseite des Handhabeabschnitts angeordnet sein. Bei dieser Ausführung ist daher eine Doppel-Rampen-Struktur gebildet.

Gemäß einer beispielhaften Weiterbildung des erfindungsgemäßen Interdentalinstruments rastet der Träger in die jeweils winkelversetzte Halteposition ein. In jeder der winkelversetzten Betriebshaltepositionen ist der Montagemechanismus derart ausgestaltet, dass ein Demontieren längs der linearen Montagerichtung gesperrt ist. Eine Demontage des Trägers von dem Handhabeabschnitt kann beispielsweise nur in bestimmten Winkelorientierungen bezüglich der Schwenkachse möglich sein, vorzugsweise nur in einer vorbestimmten Winkelorientierung des Trägers relativ zu dem Handhabeabschnitt. Vorzugsweise entspricht die Winkelorientierung derjenigen, die beim Montieren des Trägers an dem Handhabeabschnitt sich einstellt. Dadurch kann ein unerwünschtes Entfernen des Trägers von dem Handhabeabschnitt zusätzlich vermieden werden, wodurch sich vorzugsweise eine sichere und stabile Handhabung des Interdentalinstruments ergibt. Vorzugsweise kann die Sperrung mittels eines mit der Führungsnase zusammenwirkenden Radialanschlags realisiert sein. Der Radialanschlag kann beispielsweise zwischen Träger und Handhabeabschnitt bestehen. Vorzugsweise ist der Radialanschlag handhabeabschnittseitig an einer Umfangsfläche des vorzugsweise scheibenförmigen Endes vorgesehen und trägerseitig an wenigstens einer der Umfangsfläche des vorzugsweise scheibenförmigen Endes zugewandten Trägerinnenfläche angeordnet.

Gemäß einem weiteren Aspekt der Erfindung, der mit den vorherigen Aspekten kombinierbar ist, umfasst ein Interdentalinstrument einen stabförmigen Handhabeabschnitt zum Greifen, zum manuellem Greifen des Interdentalinstruments, wobei der Handhabeabschnitt zwei freie Enden aufweist. Das Interdentalinstrument kann vorzugsweise zwei separate Träger umfassen. An den Trägern kann jeweils ein Interdentalteil, wie eine Flossette oder ein Abrasivelement, beispielsweise ein Abrasivstreifen, angeordnet sein. Eine Gelenkeinrichtung kann zum schwenkbeweglichen Halten des einen Trägers an dem einen Ende des Handhabeabschnitts vorgesehen sein, so dass der eine Träger relativ zu dem einen Ende des Handhabeabschnitts um eine Schwenkachse zwischen wenigstens zwei zueinander winkelversetzten Haltepositionen verschwenkbar ist. Ferner kann das Interdentalinstrument eine weitere Gelenkeinrichtung zum schwenkbeweglichen Halten des weiteren Trägers an dem anderen Ende des Handhabeabschnitts umfassen, so dass der weitere Träger relativ zu dem anderen Ende des Handhabeabschnitts um eine Schwenkachse zwischen wenigstens zwei zueinander winkelversetzten Haltepositionen verschwenkbar ist. Die eine und/oder die weitere Gelenkeinrichtung zum schwenkbeweglichen Halten des Trägers an dem Handhabeabschnitt kann dabei wie in Bezug auf die vorherigen Aspekte der ausgebildet sein. Der Träger ist dabei derart schwenkbeweglich an dem Handhabeabschnitt gehalten sein, dass der Träger relativ zu dem Handhabeabschnitt um eine Schwenkachse verschwenkbar ist. Dabei sind wenigstens zwei zueinander winkelversetzte Haltepositionen des Trägers relativ zu dem Handhabeabschnitt gebildet, zwischen denen der Träger relativ zu dem Handhabeabschnitt verschwenkbar ist. Der Winkelversatz zwischen den wenigstens zwei Haltepositionen ist durch die Schwenkachse bestimmt. Die wenigstens zwei zueinander winkelversetzten Haltepositionen spannen zwischen sich einen Winkelsektor auf, innerhalb dem der Träger relativ zu dem Handhabeabschnitt um die Schwenkachse verschwenkbar ist.

Der Träger kann beispielsweise aus einem Metall, vorzugsweise einem rostfreien Stahl, Titan, oder aus einer metallischen Legierung hergestellt sein. Weiter können Kunststoffe, Verbundstoffe, keramische Stoffe oder keramische Verbundstoffe Anwendung finden. Der Handhabeabschnitt kann beispielsweise aus demselben Material wie der Träger hergestellt sein. Beispielsweise kann der Handhabeabschnitt aus Metall, wie rostfreiem Stahl, Titan oder einer metallischen Legierung sowie aus Kunststoff, Verbundstoff, keramischem Stoff oder keramischen Verbundstoffen hergestellt sein. Vorzugsweise sind Materialien für Träger und Handhabeabschnitt auszuwählen, die den Hygienevorschriften im Interdentalbereich entsprechen. Als Normen sind beispielsweise die DIN EN ISO 13402, DIN EN ISO 21530, DIN EN ISO 7153, DIN EN ISO 10271 zu nennen. Die Materialien der Komponenten eines Interdentalinstruments müssen bei mindestens 134°C autoklavierbar und durch handelsübliche Desinfektionsmittel gereinigt und desinfiziert werden können. Ebenso können Materialien verwendet werden, welche nicht autoklavierbar sind, jedoch durch handelsübliche Desinfektionsmittel gereinigt und desinfiziert werden können. Bei der Materialwahl ist vorzugsweise darauf zu achten, ob es sich bei der jeweiligen Komponente bzw. bei jeweiligen Anwendung um einen sogenannten semi-kritischen Einsatz, bei dem die Interdentalbehandlung derart abgehalten wird, dass kein Blutkontakt mit dem jeweiligen Bauteil auftritt, oder um einen sogenannten kritischen Einsatz handelt, bei dem bei der Interdentalbehandlung Blutkontakt an dem entsprechenden Bauteil des Interdentalinstruments auftreten kann. Komponenten des Interdentalinstruments, die für den kritischen Einsatz ausgebildet sind, müssen insbesondere bei mindestens 134°C autoklavierbar und durch handelsübliche Desinfektionsmittel gereinigt bzw. desinfiziert werden können. Bei dem semi-kritischen Einsatz ist die Autoklavierbarkeit bei mindestens 134°C nicht zwingend erforderlich, sodass eine Reinigung bzw. Desinfektion mit handelsüblichen Desinfektionsmitteln ausreichend ist.

Bei dem Interdentalteil kann es sich um ein Abrasivelement, wie ein Abrasivstreifen oder ein Diamantstreifen, handeln. Das Interdentalteil bzw. das Abrasivelement ist dauerhaft oder lösbar an dem Träger angeordnet. Es ist auch denkbar, dass das Abrasivelement beispielsweise mit dem Träger in einem Zweikomponenten-Spritzgussverfahren hergestellt ist. Beispielhafte Materialien für das Abrasivelement sind korrosionsfestes Metall, zum Beispiel Edelstahl, oder auch Kunststoffe. Die Diamantierung der Diamantstreifen kann Diamantierungskörnungen im Bereich zwischen 5 µm und 200 µm Korndurchmesser aufweisen. Es ist möglich, die Diamantierung einseitig oder beidseitig des Abrasivelements vorzusehen. Beispielsweise können der Träger und/oder das Abrasivelement eine Anzeigeeinrichtung und/oder eine Farbmarkierung aufweisen, anhand welcher ablesbar bzw. erkennbar ist, an welcher Seite bzw. Fläche des Abrasivelements die Körnung bzw. Diamantierung vorgesehen ist. Dadurch wird ein schnelles Identifizieren der entsprechenden benötigten Behandlungsseite des Abrasivelements gewährleistet sowie eine Fehlanwendung des Abrasivelements verhindert. Bei manchen Abrasivelementen ist eine derartige Anzeigeeinrichtung sogar erforderlich, da mit bloßem Auge nicht erkennbar ist, an welcher Seite die Körnung bzw. Diamantierung an dem Abrasivelement sich befindet. Beispielsweise kann es sich bei der Anzeigeeinrichtung um eine farbliche und/oder strukturelle Anzeigeeinrichtung handeln. In einem in Längserstreckungsrichtung betrachteten Mittelabschnitt des Abrasivelements kann eine diamantierungsfreie Zone ausgebildet sein. Ferner sind in der Regel die beiden gegenüberliegenden, sich entlang der Längserstreckung des Abrasivelements ausbildenden Abrasivkanten ohne eine Diamantierung ausgebildet. Somit ist eine Herstellung der Abrasiv- bzw. Diamantstreifen aus einem bereits diamantierten Metallband durch Abschneiden quer zur Längserstreckung des Metallbands möglich, wobei beispielsweise Laser- oder mechanische Schneideinrichtungen Anwendung finden. Als Abrasivbeschichtungen an den Abrasivelementen können auch Schleifmittel, wie beispielsweise Aluminiumoxid, Siliziumkarbid oder Keramikmaterialien, eingesetzt werden. Des Weiteren ist es denkbar, den Abrasivstreifen derart an der Oberfläche auszubilden, dass die Abrasivwirkung über die Oberflächenrauhigkeit erzielt wird. Des Weiteren ist es denkbar, den Abrasiv- bzw. Diamantstreifen diamantierungs- bzw. abrasivfrei auszuführen und an wenigstens einer Abrasivkante eine Verzahnung, wie eine Sägeverzahnung, vorzusehen. Eine zykloidische bzw. wellige Form der Abrasivkanten kann ebenfalls vorgesehen sein. Des Weiteren ist es denkbar, den Abrasiv- bzw. Diamantstreifen an wenigstens einer Abrasivkante mit einer Verzahnung, wie einer Sägeverzahnung, vorzusehen. Eine zykloidische bzw. wellige Form der Abrasivkanten kann ebenfalls vorgesehen sein. Es ist außerdem möglich, dass das Abrasivelement aus rostfreiem Stahl, insbesondere aus einem rostfreien Stahlstreifen, hergestellt ist und/oder Öffnungen, wie mechanische Ausbuchtungen, an der Oberfläche besitzt, wobei insbesondere das Abrasivelement die Struktur einer Reibe, Raspel oder Raffel aufweist. Zur schnellen Identifikation der jeweiligen Körnungen an den entsprechenden Abrasivelementen für einen Benutzer können die Abrasivelemente mit einer Farbmarkierung, wie Farbstrich(e), Farbpunkt(e) oder andere beliebige Formen, markiert werden und/oder der Träger eine farbige Oberfläche aufweisen, die eine Farbkodierung zur Kennzeichnung der verschiedenen Körnungen darstellt. Beispielsweise liegt eine in Längserstreckungsrichtung gemessene Gesamtbreite des Abrasivelements im Bereich von 15 mm bis 35 mm, vorzugsweise im Bereich von 20 mm bis 30 mm, insbesondere liegt die Breite bei etwa 25 mm. Eine quer zur Längserstreckungsrichtung gemessene Gesamthöhe des Abrasivelements kann beispielsweise im Bereich von 2 mm bis 8 mm, vorzugsweise im Bereich von 3 mm bis 7 mm oder im Bereich von 4 mm bis 6 mm, liegen.

Gemäß einem weiteren Aspekt der vorliegenden Erfindung, der mit den vorhergehenden Aspekten kombinierbar ist, umfasst ein erfindungsgemäßer Handhabeabschnitt für ein insbesondere erfindungsgemäßes Interdentalinstrument einen Stababschnitt mit zwei freien Enden. Der Stababschnitt besitzt entlang seiner Längserstreckung einen im Wesentlichen konstanten Querschnitt, vorzugsweise einen im Wesentlichen runden, ovalen oder elliptischen Querschnitt. Zu den freien Enden hin verjüngt sich der Querschnitt zunehmend und ändert seine geometrische Form weg von der runden Gestalt hin zu einer dünneren, nahezu plattenförmigen Form. An den freien Enden ist jeweils ein Scheibenabschnitt mit jeweils zwei diametral gegenüberliegenden, insbesondere parallelen, Oberflächen angeordnet. Der Stababschnitt geht dabei vorzugsweise kontinuierlich in die jeweiligen Scheibenabschnitte über. Die Oberflächen können dazu vorgesehen sein, an einen Träger, an dem ein Interdentalteil, wie eine Flossette oder ein Abrasivelement, beispielsweise ein Abrasivstreifen, angeordnet ist, angebracht zu werden. Bei den Oberflächen kann es sich vorzugsweise um Klemmoberflächen zum insbesondere klemmenden Anbringen je eines Trägers an den Handhabeabschnitt handeln. Die Scheibenabschnitte und insbesondere die Klemmoberflächen können dabei wie in Bezug auf die vorhergehenden Erfindungsaspekte dimensioniert und ausgebildet sein.

Der Handhabeabschnitt umfasst auch einen an dem Stababschnitt angeordneten Halteabschnitt mit zwei diametral gegenüberliegenden Halteflächen zum manuellen Greifen und Betätigen des Handhabeabschnitts. Beispielsweise befindet sich der Halteabschnitt etwa auf halber Entfernung zwischen den beiden freien Enden, vorzugsweise etwa bei 40 %, 30 % oder 20 % der Entfernung der freien Enden ausgehend von einem freien Ende. In der Draufsicht besitzt der Halteabschnitt eine im Wesentlichen ovale Form und ist in der Draufsicht bezüglich des Stababschnitts mittig, d.h. insbesondere symmetrisch, angeordnet. Bei dem Halteabschnitt handelt es sich im Wesentlichen um eine flache Scheibe, betrachtet in einer Stirn- bzw. Seitenansicht auf den Halteabschnitt. Erfindungsgemäß ist der Halteabschnitt bzw. dessen Halteflächen bezüglich der Scheibenabschnittoberflächen in einem Winkel orientiert. Vorzugsweise liegt der Winkel in einem Bereich von 10° bis 80°, vorzugsweise im Bereich von 20° bis 70° oder im Bereich von 30° bis 60°. Dadurch ist eine besonders ergonomische Anwendung des Handhabeabschnitts gewährleistet. Wenn beim manuellen Greifen des Handhabeabschnitts, vorzugsweise zwischen Daumen und Zeigefinger, sind die Scheibenabschnittoberflächen bei normaler, ergonomisch angenehmer Handhaltung möglichst exakt horizontal orientiert, so dass die auf dem Handhabeabschnitt montierten Träger möglichst vertikal orientiert sind, um eine einfache und verbesserte Anwendung des Interdentalinstruments zu erzielen.

In einem weiteren erfindungsgemäßen Aspekt, der mit den vorhergehenden Aspekten kombinierbar ist, ist ein Abrasivelement, insbesondere ein Abrasivstreifen, für ein insbesondere erfindungsgemäßes Interdentalinstrument bereitgestellt. Das Abrasivelement umfasst dabei zwei Flanschabschnitte zum Einspannen in einen insbesondere erfindungsgemäßen Träger, der dazu ausgelegt ist, an einem insbesondere erfindungsgemäßen Handhabeabschnitt zum manuellen Greifen des Interdentalinstruments angebracht zu sein. Die Flanschabschnitte besitzen jeweils eine Materialaussparung, wie eine Langlochausnehmung, zum Umspritzen mit Trägermaterial. Beispielsweise erstreckt sich die Materialaussparung quer zur Längserstreckungsrichtung des Abrasivelements und besitzt beispielsweise eine Materialaussparungsbreite, gemessen in Längserstreckungsrichtung des Abrasivelements, von wenigstens 0,5 mm bis beispielsweise 3 mm.

Zwischen den beiden Flanschabschnitten erstreckt sich ein Abrasivabschnitt zum Behandeln von Interdentalräumen, wobei insbesondere der Abrasivabschnitt in einer zur Erstreckungsrichtung querliegenden Höhenrichtung eine konstante Abmessung aufweist. Beispielhafte Materialien für das Abrasivelement sind korrosionsfestes Metall, z.B. Edelstahl, oder auch Kunststoffe. Ferner kann eine Diamantierung oder eine Körnung mit beispielsweise Körnungen im Bereich von 5 µm bis 200 µm Korndurchmesser aufweisen. Es ist möglich, die Diamantierung bzw. Körnung einseitig oder beidseitig des Abrasivelements vorzusehen. Erfindungsgemäß ist eine Abmessung der Flanschabschnitte in Höhenrichtung wenigstens 1 mm größer als die des Abrasivabschnitts. Ferner beträgt erfindungsgemäß ein Abstand zwischen der Materialaussparung und einem diese umgebenden Flanschabschnittrand wenigstens 1 mm. Es wurde herausgefunden, dass somit eine einfachere und stabilere Befestigung des Abrasivelements an einem Träger zu erzielen ist.

Der Träger ist derart gebildet und/oder der Träger und der Handhabeabschnitt sind derart aufeinander formabgestimmt, dass der Träger an dem Handhabeabschnitt angebracht werden kann. Die Anbringung des Trägers an dem Handhabeabschnitt erfolgt entsprechend einer zuvor oder unten beschriebenen bevorzugten Ausführungen von erfindungsgemäßen Interdentalinstrumenten mittels des Montage-/Demontagemechanismus.

Gemäß einem weiteren Aspekt der vorliegenden Erfindung, der mit den vorhergehenden Aspekten kombinierbar ist, umfasst einen Träger für ein insbesondere erfindungsgemäßes Interdentalinstrument einen im Wesentlichen U-förmigen Montageabschnitt. Der Montageabschnitt besitzt zwei gegenüberliegende und insbesondere gleich ausgebildete Schenkel und eine die beiden Schenkel miteinander verbindende Montagestruktur zum Anbringen an einen erfindungsgemäßen Handhabeabschnitt des Interdentalinstruments, der zum manuellen Greifen des Interdentalinstruments ausgelegt ist. Beispielsweise können der Montageabschnitt und die Montagestruktur wie in Bezug auf die vorhergehenden Erfindungsaspekte ausgebildet

Der Träger umfasst außerdem einen Betätigungsabschnitt mit zwei Flanken zum Einspannen eines Interdentalteils, wie einer Flossette oder eines insbesondere erfindungsgemäßen Abrasivelements, und zwei Greifern zum manuellen Greifen des Trägers. Beispielsweise können die Greifer die in Bezug auf den ersten Erfindungsaspekt beschriebenen Greifabschnitte umfassen. Es ist möglich, dass der Betätigungsabschnitt und der Montageabschnitt unterschiedliche Farben aufweisen, um eine eindeutige Indentifizierung zu gewährleisten, da die Farben den Typ bzw. die Körnung und/oder die Diamantierung des jeweiligen Interdentalteils charakterisieren können. Erfindungsgemäß sind der Montageabschnitt und der Betätigungsabschnitt derart in einem zweistufigen Spritzgussverfahren hergestellt, dass die Montageabschnittsschenkel und die Greifer an einer Grenzfläche in Kontakt miteinander sind, und die Montageabschnittsschenkel und die Flanken frei von einer Kontakt-Grenzfläche zwischen Ihnen sind.

Bei den erfindungsgemäßen Trägern sind die Montageabschnittsschenkel wenigstens teilweise von dem Betätigungsabschnitt, insbesondere den Greifern, umspritzt. Bei einer Weiterbildung ist die Kontakt-Grenzfläche zwischen Montageabschnittsschenkel und Greifer wenigstens teilweise an einer Umfangsfläche der Montageabschnittsschenkel ausgebildet. Ferner kann eine Längserstreckung der Flanken etwa ein Drittel der Längserstreckung der Montageabschnittsschenkel betragen. Beispielsweise beträgt die Längserstreckung der Flanken weniger als ein Drittel der Montageabschnittsschenkel-Längserstreckung.

Gemäß einem weiteren erfindungsgemäßen Aspekt ist ein Verfahren zum Herstellen eines erfindungsgemäßen Trägers für ein insbesondere erfindungsgemäßes Interdentalinstrument bereitgestellt. Bei dem Verfahren wird ein im Wesentlichen U-förmiger Montageabschnitt mit zwei Schenkeln und einer die beiden Schenkel miteinander verbindenden Montagestruktur zum Anbringen an einen insbesondere erfindungsgemäßen Handhabeabschnitt des Interdentalinstruments, der zum manuellen Greifen des Interdentalinstruments ausgelegt ist, in einem Spritzgussverfahren hergestellt. Ferner wird erfindungsgemäß ein Betätigungsabschnitt mit zwei Flanken zum Einspannen eines Interdentalteils, wie einer Flossette oder eines insbesondere erfindungsgemäßen Abrasivelements, und zwei Greifern zum manuellen Greifen des Trägers in einem nachgeschalteten Spritzgussverfahren an die Montageabschnittsschenkel angespritzt. Dadurch stellt sich die in Bezug auf den vorhergehenden Erfindungsaspekt beschriebene Kontakt-Grenzfläche zwischen Montageabschnittsschenkel und Betätigungsabschnitt ein.

Bei dem erfindungsgemäßen Verfahrens wird nach dem Spritzgussverfahrensschritt zur Herstellung des Montageabschnitts in einem nachgeschalteten Spritzgussverfahrensschritt der Betätigungsabschnitt hergestellt. Vorzugsweise wird der Betätigungsabschnitt an den Montageabschnitt und das Interdentalteil derart angespritzt, dass die Greifer an die Montageabschnittschenkel und die Flanken an das Interdentalteil angespritzt werden. Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine Frontalansicht einer ersten Ausführung eines Trägers mit einem daran angeordneten Interdentalteil eines erfindungsgemäßen Interdentalinstruments;
- Fig. 2: eine perspektivische Ansicht des Trägers gemäß Figur 1;
- Fig. 3: eine Seitenansicht des Trägers gemäß der Figuren 1 und 2;
- Fig. 4: eine Draufsicht eines ersten Ausführungsbeispiels eines Handhabeabschnitts des erfindungsgemäßen Interdentalinstruments;
- Fig. 5: eine Unteransicht des Handhabeabschnitts gemäß Figur 4;
- Fig. 6: eine Seitenansicht des Handhabeabschnitts gemäß der Figuren 4 und 5;
- Fig. 7: eine Seitenansicht eines alternativen Handhabeabschnitts;
- Fig. 8: eine Unteransicht einer weiteren Alternative des Handhabeabschnitts;
- Fig. 9: einen Vormontagezustand eines ersten Ausführungsbeispiels des erfindungsgemäßen Interdentalinstruments;
- Fig. 10: einen Montagezustand des Interdentalinstruments gemäß Figur 9;
- Fig. 11: einen Montagezustand des Interdentalinstruments gemäß der Figuren 9 und 10;
- Fig. 12: eine Draufsicht eines zweiten Ausführungsbeispiels des Handhabeabschnitts des erfindungsgemäßen Interdentalinstruments;
- Fig. 13: eine Unteransicht des Handhabeabschnitts gemäß Figur 12;
- Fig. 14: eine Seitenansicht des Handhabeabschnitts gemäß der Figuren 12 und 13;
- Fig. 15: einen Vormontagezustand eines zweiten Ausführungsbeispiels des erfindungsgemäßen Interdentalinstruments;
- Fig. 16: einen Montagezustand des Interdentalinstruments gemäß Fig. 15;
- Fig. 17: einen weiteren Montagezustand des erfindungsgemäßen Interdentalinstruments gemäß der Figuren 15 und 16;
- Fig. 18: eine Frontalansicht auf ein zweites Ausführungsbeispiel eines Trägers für ein erfindungsgemäßes Interdentalinstrument;
- Fig. 19: eine Draufsicht auf einen Ausschnitt eines dritten Ausführungsbeispiels eines Handhabeabschnitts für ein erfindungsgemäßes Interdentalinstrument;
- Fig. 20: eine Draufsicht auf einen Ausschnitt eines vierten Ausführungsbeispiels eines Handhabeabschnitts für ein erfindungsgemäßes Interdentalinstrument;
- Fig. 21: eine Frontalansicht auf ein drittes Ausführungsbeispiel eines Trägers für ein erfindungsgemäßes Interdentalinstrument;
- Fig. 22: eine Draufsicht auf einen Ausschnitt eines fünften Ausführungsbeispiels eines Handhabeabschnitts für ein erfindungsgemäßes Interdentalinstrument;
- Fig. 23: eine Draufsicht auf einen Ausschnitt eines sechsten Ausführungsbeispiels eines Handhabeabschnitts für ein erfindungsgemäßes Interdentalinstrument;
- Fig. 24: ein weiteres Ausführungsbeispiel eines erfindungsgemäßen Handabschnitts eines erfindungsgemäßen Interdentalinstruments mit zwei, jeweils an einem Ende des Handhabeabschnitts anordenbaren Trägern;
- Fig. 25: eine Seitenansicht auf das Ausführungsbeispiel des Handhabeabschnitts gemäß Figur 24;
- Fig. 26: eine weitere beispielhafte Ausführung eines erfindungsgemäßen Handhabeabschnitts;
- Fig. 27: eine weitere beispielhafte Ausführung eines beispielhaften Handhabeabschnitts;
- Fig. 28: eine Seitenansicht des Handhabeabschnitts gemäß Figur 27;
- Fig. 29: eine weitere beispielhafte Ausführung eines erfindungsgemäßen Handhabeabschnitts in der Draufsicht;
- Fig. 30: eine Seitenansicht des Handhabeabschnitts gemäß Figur 29;
- Fig. 31: eine Unteransicht des Handhabeabschnitts gemäß der Figuren 29 und 30;
- Fig. 32: eine weitere beispielhafte Ausführung des erfindungsgemäßen Handhabeabschnitts;
- Fig. 33: eine Seitenansicht des Handhabeabschnitts gemäß Figur 32;
- Fig. 34: eine weitere beispielhafte Ausführung eines erfindungsgemäßen Handhabeabschnitts;
- Fig. 35: eine Seitenansicht des Handhabeabschnitts gemäß Figur 34;
- Fig. 36: eine perspektivische Ansicht eines Montageabschnitts eines erfindungsgemäβen Trägers für ein erfindungsgemäßes Interdentalinstrument;
- Fig. 37: eine perspektivische Ansicht des Montageabschnitts gemäß Fig. 36 mit demontiertem Interdentalteil;
- Fig. 38: einen erfindungsgemäßen montierten Träger;
- Fig. 39: eine Draufsicht auf eine beispielhafte Ausführung eines erfindungsgemäßen Interdentalteils; und
- Fig. 40: eine Schnittansicht gemäß der Linie XL-XL in Fig. 39.

In der nachfolgenden Beschreibung beispielhafter Ausführungen wird das erfindungsgemäße Interdentalinstrument im Allgemeinen mit der Bezugsziffer 1 versehen. Entsprechende Komponenten der verschiedenen beispielhaften Ausführungen des erfindungsgemäßen Interdentalinstruments 1 werden mit derselben Bezugsziffer versehen.

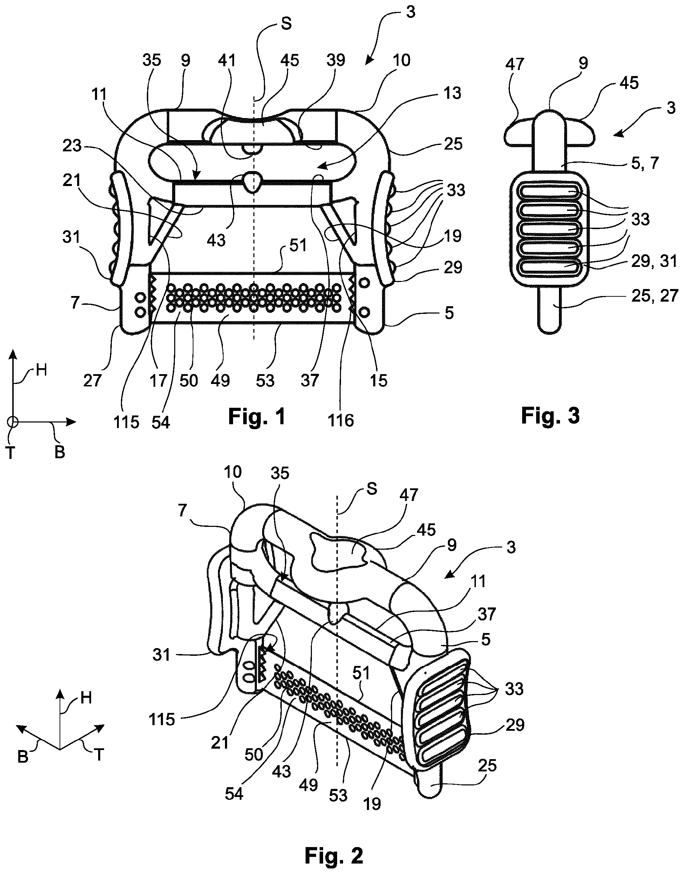

In Figur 1 ist eine Frontalansicht eines Trägers 3 des Interdentalinstruments 1 zu sehen. Der Träger 3 kann beispielsweise aus einem Metall, vorzugsweise einem rostfreien Stahl, Titan, oder aus einer metallischen Legierung hergestellt sein. Weiter können Kunststoffe, Verbundstoffe oder keramische Stoffe Anwendung finden. Vorzugsweise sind die Materialien bei mindestens 134°C autoklavierbar und/oder können durch handelsübliche Desinfektionsmittel gereinigt und desinfiziert werden. In Frontalansicht ist ein Umriss des Trägers 3 im Wesentlichen U-förmig ausgebildet. Zwei in Breitenrichtung B, welche in der Zeichenebene liegt, betrachtete seitliche Flanken 5, 7 erstrecken sich im Wesentlichen parallel zueinander in einer zur Breitenrichtung B senkrechten Höhenrichtung H. Die Flanken 5, 7 gehen in zwei, sich im Wesentlichen in Breitenrichtung B erstreckende und die beiden Flanken 5, 7 miteinander verbindende Klemmarme 9, 11 (Zinken) über, wodurch sich eine Art Gabelstruktur ergibt. Die Klemmarme 9, 11 erstrecken sich im Wesentlichen parallel zueinander und sind derart miteinander verbunden, dass zwischen ihnen ein Spannraum 13 gebildet ist. Die jeweiligen Flanken 5, 7 gehen vorzugsweise kontinuierlich in die jeweiligen Klemmarme 9, 11 über. Beispielsweise besitzt ein Übergangsbereich zwischen Flanke 5, 7 und Klemmarm 9, 11 eine gebogene, insbesondere kreisabschnittsförmige, Form, wobei insbesondere ein Radius des Kreisbogenabschnitts 10 etwa 5 mm beträgt. Innenseitig der beiden Flanken 5, 7 erstrecken sich jeweils von einer Flankeninnenseite 15, 17 Stützflanken 19, 21 hin zu dem in Höhenrichtung H betrachtet unteren Klemmarm 11. Vorzugsweise erstrecken sich die Stützflanken 19, 21 hin zu einer Unterseite 23 des Klemmarms 11. Beispielsweise erstrecken sich die Stützflanken 19, 21 in einem Winkel von etwa 30°, wobei auch weitere Winkel im Bereich von 10° bis 60°, beispielsweise 45°, bezüglich der Höhenrichtung H zwischen der jeweiligen Flanke 5, 7 und dem Klemmarm 11 denkbar sind. Wie in Figur 1 zu sehen ist, besitzen die Stützflanken 19, 21 eine deutlich geringere Querschnittsabmessung als die Klemmarme 9, 11 und als die Flanken 5, 7. Die Stützflanken 19, 21 sind gemäß Figur 1 nur einseitig auf der Vorderseite an den Flanken 5, 7 angeordnet, d. h. nur auf derjenigen Seite, auf welcher sich die Abrasiv- oder Diamantseite (Körnung) 54 befindet. Sie dienen damit zusätzlich zur Kennzeichnung der Abrasiv- oder Diamantseite 54 des Abrasivelements 49. An den jeweiligen, den Flankeninnenseiten 15, 17 gegenüberliegenden Flankenaußenseiten 25, 27 der Flanken 5, 7 sind jeweils ein Greifabschnitt zum manuellen Greifen und/oder Handhaben des Trägers 3 vorgesehen. Die Greifabschnitte 31, 29 weisen eine nach innen gekrümmte Geometrie auf, um ein ergonomisches Greifen bzw. Handhaben des Trägers zu ermöglichen, also insbesondere dann, wenn der Träger 3 zur Interdentalbehandlung ohne den Handhabeabschnitt 55 eingesetzt wird.. Beispielweise beträgt der Krümmungsradius etwa 16 mm, wobei auch weitere Radien denkbar sind und vorzugsweise im Bereich vom 5mm bis 30 mm liegen können. Die Greifabschnitte 29, 31 können mehrere sich in einer zur Breiten- und Höhenrichtung lotrechten Tiefenrichtung T sich erstreckende und/oder im Wesentlichen entlang der vollständigen Tiefe der Greifabschnitte 29, 31 ausbildende Noppen 33 aufweisen, die das Greifen bzw. Handhaben des Trägers 3 zusätzlich erleichtern können.

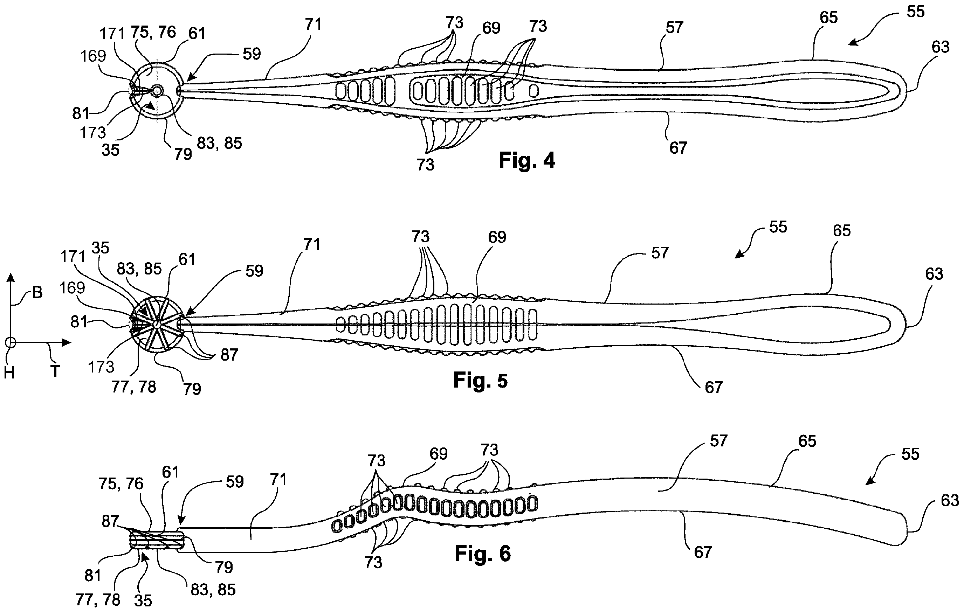

Gemäß dem in den Figuren 1 bis 3 abgebildeten Ausführungsbeispiel des Trägers 3 des erfindungsgemäßen Interdentalinstruments 1 weist der Träger 3 eine Gelenkeinrichtung 35 zum schwenkbeweglichen Halten des Trägers 3 an einem weiteren Bauteil des Interdentalinstruments 1 auf. Die Gelenkeinrichtung 35 ist derart ausgebildet, dass der Träger relativ zu dem weiteren Bauteil des Interdentalinstruments 1 um eine Schwenkachse S verschenkbar ist. Wie insbesondere in Figur 1 und Figur 2 angedeutet ist, ist die Schwenkachse vorzugsweise parallel zur Höhenrichtung H orientiert und entspricht einer Symmetrieachse des Trägers 3. Die Gelenkeinrichtung weist zwei sich gegenüberliegende Führungsgegenflächen 37, 39 auf. Die Führungsgegenflächen 37, 39 sind gemäß dem dargestellten Ausführungsbeispiel an einander zugewandten Seiten der Klemmarme 9, 11 angeordnet. Die Klemmarme gehen beispielsweise spannrauminnenseitig kontinuierlich, vorzugsweise gebogen, ineinander über (Gabelstruktur). Die Führungsgegenflächen 37, 39 sind im Wesentlichen plan und zueinander parallel orientiert. Vorzugsweise sind die beiden Führungsgegenflächen 37, 39 vollständig parallel zueinander ausgebildet, bis auf jeweils eine sich von dem jeweiligen Klemmarm 9, 11 weg in Richtung des jeweils anderen Klemmarms 9, 11 erstreckende Führungsnase 41, 43. Die Führungsnasen 41, 43 können zu einem Montage-/Demontagemechanismus der Gelenkeinrichtung 35 gehören, welcher das Montieren des Trägers 3 an einer einzigen vorbestimmten Einschiebeposition an dem weiteren Bauteil des Interdentalinstruments 1 entlang einer linearen Montagerichtung M (dargestellt in Figur 6) zulässt. Wie insbesondere in Figur 2 zu sehen ist, besitzt die an dem Klemmarm 11 angeordnete Führungsnase 43 eine halbkugelförmige Form. Das Gleiche gilt auch für die an dem oberen, in Höhenrichtung H betrachteten, Klemmarm 9 angeordnete Führungsnase 41. Weitere geometrische Formen, wie beispielsweise eine ovale Form, eine Kegelform oder eine Kegelstumpfform, sind ebenfalls denkbar.

Bezugnehmend auf die Figuren 2 und 3 weist der in Höhenrichtung H obere Klemmarm 9 eine vorzugsweise mittig bezüglich der Breitenerstreckung B des Klemmarms 9 angeordnete Scheibe 45 auf. Dadurch ist an der dem Spannraum 13 zugewandten Unterseite der Scheibe 45 eine vergrößerte Führungsgegenfläche 39 der Gelenkeinrichtung 35 realisiert. Somit ergibt sich ein besser geführtes und stabileres Verschwenken des Trägers 3 bezüglich des weiteren Bauteils des Interdentalinstruments 1. Ein Durchmesser der Scheibe 45 kann zur Oberseite 47 hin abnehmen, wie es beispielsweise in Figur 3 dargestellt ist. Es ist klar, dass der Klemmarm 9 die Scheibe 45 nicht zwingend umfassen muss, sondern beispielsweise auch einen konstanten Querschnitt entlang dessen vollständiger Erstreckung in Breitenrichtung B besitzen kann. Die Scheibe 45 besitzt außerdem noch den Vorteil, der insbesondere beim manuellen Greifen des Trägers 3 bei einer Anwendung des Trägers 3 zur Interdentalbehandlung ohne den Handhabeabschnitt 55 zum Tragen kommt, dass der Benutzer eine weitere Auflagefläche für einen Finger zur Verfügung hat, um die gezielte und ergonomische Anwendung des Trägers 3 zu verbessern. Beispielsweise kann der Benutzer den Träger 3 mit Daumen und Mittelfinger jeweils an einem der Greifabschnitte 29, 31 seitlich fassen und den Zeigefinger von oben auf die Scheibe 45 ablegen, um den Träger 3 stabiler in der Hand zu halten und eine gezieltere Behandlung durchführen zu können.

Eine in Breitenrichtung B gemessene Gesamtbreite des Trägers 3 liegt beispielsweise im Bereich von 10 mm bis 50 mm, vorzugsweise im Bereich von 15 mm bis 45 mm, im Bereich vom 20 mm bis 40 mm, oder im Bereich von 25 mm bis 35 mm. Eine in Höhenrichtung H gemessene Höhe des Trägers 3 kann beispielsweise im Bereich von 10 mm bis 40 mm, vorzugsweise im Bereich von 15 mm bis 35 mm, im Bereich von 20 mm bis 30 mm liegen oder insbesondere etwa 22 mm bis 25 mm betragen. Eine in Tiefenrichtung T gemessene maximale Tiefe des Trägers 3, die vorzugsweise durch den Scheibenabschnitt 45 bzw. den Greifabschnitt 29, 31 definiert ist, liegt beispielsweise im Bereich von 5 mm bis 15 mm, vorzugsweise im Bereich von 6 mm bis 12 mm oder im Bereich von 7 mm bis 10 mm. Die Flanken 5, 7 besitzen beispielsweise eine kreisförmige Querschnittsform, wobei ein Durchmesser der Flanken 5, 7 in einem in Höhenrichtung H betrachtet unteren Bereich, der beispielhaft über dem jeweiligen Greifabschnitt 29, 31 angeordnet ist, etwa 2 mm betragen kann und in einem in Höhenrichtung H betrachtet oberen Bereich, der beispielhaft unterhalb des jeweiligen Greifabschnitts 29, 31 angeordnet ist, etwa 2,5 mm bis 7 mm betragen kann.

An dem Träger 3 ist ein Interdentalteil zur Interdentalbehandlung an einem Patienten angeordnet. In den dargestellten Ausführungen handelt es sich bei dem Interdentalteil um ein Abrasivelement 49, wie ein Abrasivstreifen oder ein Diamantstreifen. Das Interdentalteil bzw. das Abrasivelement 49 ist in Höhenrichtung H betrachtet an den unteren der Flanken 5, 7 angeordnet. Beispielsweise liegen die Anbindungspunkte des Abrasivelements 49 an den jeweiligen Flankeninnenseiten 15, 17 der Flanken 5, 7. Beispielsweise ist das Abrasivelement 49 lösbar an dem Träger 3, insbesondere an den Flanken 5, 7 befestigt. Es ist auch denkbar, dass das Abrasivelement 49 beispielsweise mit dem Träger 3 in einem Zweikomponenten-Spritzgussverfahren hergestellt ist. Beispielsweise handelt es sich beim Abrasivelement 49 um einen Diamantstreifen oder einen Abrasivstreifen. Beispielhafte Materialien sind korrosionsfestes Metall, zum Beispiel Edelstahl, oder auch Kunststoffe. Die Diamantierung 50, die auch als Körnung ausgebildet sein kann, der Diamantstreifen kann Diamantierungskörnungen im Bereich zwischen 5 µm und 200 µm Korndurchmesser aufweisen. Es ist möglich, die Diamantierung einseitig oder beidseitig des Abrasivelements 49 vorzusehen. In einem in Breitenrichtung B betrachteten Mittelabschnitt des Abrasivelements 49 kann eine diamantierungsfreie Zone ausgebildet sein. Ferner sind in der Regel die beiden gegenüberliegenden, sich entlang der Längserstreckung des Abrasivelements 49 ausbildenden Abrasivkanten 51, 53 ohne eine Diamantierung ausgebildet. Somit ist eine Herstellung der Abrasiv- bzw. Diamantstreifen aus einem bereits diamantierten Metallband durch Abschneiden quer zur Längserstreckung des Metallbands möglich, wobei beispielsweise Laser- oder mechanische Schneideinrichtungen Anwendung finden. Als Abrasivbeschichtungen an den Abrasivelementen 49 können auch Schleifmittel, wie beispielsweise Aluminiumoxid, Siliziumkarbid oder Keramikmaterialien, eingesetzt werden. Des Weiteren ist es denkbar, den Abrasivstreifen derart an der Oberfläche auszubilden, dass die Abrasivwirkung über die Oberflächenrauhigkeit erzielt wird. Des Weiteren ist es denkbar, den Abrasiv- bzw. Diamantstreifen diamantierungs- bzw. abrasivfrei auszuführen und an wenigstens einer Abrasivkante 51, 53 eine Verzahnung, wie eine Sägeverzahnung, vorzusehen. Eine zykloidische bzw. wellige Form der Abrasivkanten 51, 53 kann ebenfalls vorgesehen sein. Des Weiteren ist es denkbar, den Abrasiv- bzw. Diamantstreifen an wenigstens einer Abrasivkante 51, 53 mit einer Verzahnung, wie einer Sägeverzahnung, vorzusehen. Eine zykloidische bzw. wellige Form der Abrasivkanten 51, 53 kann ebenfalls vorgesehen sein. Es ist außerdem möglich, dass das Abrasivelement aus rostfreiem Stahl, insbesondere aus einem rostfreien Stahlstreifen, hergestellt ist und/oder Öffnungen, wie mechanische Ausbuchtungen, an der Oberfläche besitzt, wobei insbesondere das Abrasivelement die Struktur einer Reibe, Raspel oder Raffel aufweist. Zur schnellen Identifikation der jeweiligen Körnungen an den entsprechenden Abrasivelementen 49 für einen Benutzer können die Abrasivelemente 49 mit einer Farbmarkierung (Farbstrich/-e, Farbpunkt/-e oder andere beliebige Formen) markiert werden und/oder der Träger 3 eine farbige Oberfläche aufweisen, die eine Farbkodierung zur Kennzeichnung der verschiedenen Körnungen darstellt. Beispielsweise liegt eine in Breitenrichtung B gemessene Gesamtbreite des Abrasivelements 49 im Bereich von 15 mm bis 35 mm, vorzugsweise im Bereich von 20 mm bis 30 mm, insbesondere liegt die Breite bei etwa 25 mm. Eine in Höhenrichtung H gemessene Gesamthöhe des Abrasivelements 49 kann beispielsweise im Bereich von 2 mm bis 8 mm, vorzugsweise im Bereich von 3 mm bis 7 mm oder im Bereich von 4 mm bis 6 mm liegen.

Wie in Figur 2 zu sehen ist, ist an den Flanken 5, 7 des Trägers 3 eine Anzeigeeinrichtung 115, 116 zum Hinweisen auf bzw. Kenntlichmachen der Diamantierung 50 bzw. Körnung vorgesehen, um dem Benutzer anzudeuten, an welcher Seite bzw. Fläche des Abrasivelements 59 sich die Diamantierung 50 bzw. Körnung befindet. Dadurch kann die richtige Anwendung des Interdentalinstruments gewährleistet und eine Fehlanwendung verhindert werden. Beispielweise, wie in Figur 2 abgebildet, ist die Anzeigeeinrichtung durch beispielsweise vier Zacken gleicher Form, die beispielweise als gleichseitige und/oder gleichschenklige Dreiecke ausgebildet sind, bereitgestellt, wobei auch jegliche andere geometrische Formen denkbar sind. Es ist möglich, dass die Anzeigeeinrichtung 115, 116, bzw. die Zacken, beidseitig, d. h. sowohl an der Flanke 5 als auch an der Flanke 7 auf der entsprechenden Seite bzw. Fläche des Abrasivelements 49 angeordnet sind. Alternativ kann die Anzeigeeinrichtung 115, 116, wie die Zacken, auch Teil des Abrasivelements 49 sein. Vorzugsweise ist die Anzeigeeinrichtung 115, 116 unmittelbar angrenzend an wenigstens eine der beiden Flanken 5, 7 an dem Abrasivelement 49 angebracht.

Bezugnehmend auf die Figuren 4 bis 6 ist eine Ausführungsform eines Handhabeabschnitts 55 des erfindungsgemäßen Interdentalinstruments 1 abgebildet, der dazu vorgesehen ist, manuell von einer Bedienperson zum Handhaben des Interdentalinstruments 1 gegriffen zu werden. Beispielsweise handelt es sich bei Figur 4 um eine Oberansicht auf den Handhabeabschnitt 55 und bei Figur 5 um eine Unteransicht des Handhabeabschnitts 55. Der Handhabeabschnitt 55 kann beispielsweise aus demselben Material wie der Träger 3 hergestellt sein. Beispielsweise kann der Handhabeabschnitt 55 aus Metall, wie rostfreiem Stahl, Titan oder einer metallischen Legierung sowie aus Kunststoff, Verbundstoff, keramischem Stoff oder keramischen Verbundstoffen hergestellt sein. Vorzugsweise sind Materialien auszuwählen, die den Hygienevorschriften, insbesondere DIN EN ISO 13402, DIN EN ISO 21530, DIN EN ISO 7153, DIN EN ISO 10271, im Interdentalbereich entsprechen. Der Handhabeabschnitt 55 umfasst einen länglichen Stababschnitt 57, der an einem freien Ende 59 in einen Scheibenabschnitt 61 mündet. Der Stababschnitt 57 ist nicht auf eine bestimmte geometrische Form limitiert, sondern kann jede geeignete geometrische Form aufweisen und beispielsweise gerade, gebogen oder wenigstens abschnittsweise gebogen ausgebildet sein. Generell ist es von Vorteil, den Handhabeabschnitt 55 derart zu gestalten und/oder zu dimensionieren, dass er ergonomisch gegriffen werden kann. Um die Ergonomie weiter zu verbessern, kann an dem Stababschnitt 57 wenigstens ein vordefinierter Greifabschnitt vorgesehen sein, der auch die Greifstabilität für die Finger der Hand des Bedieners erhöhen soll. Eine beispielhafte geometrische Form ist in den Figuren 4 und 5 dargestellt, gemäß der der Stababschnitt 57 an einem dem Scheibenabschnitt diametral gegenüberliegenden freien Ende 63 abgerundet ausgebildet ist. Von diesem freien Ende 63 aus geht der Stababschnitt 57 in ein in Breitenrichtung B gemessen aufgeweitetes Segment 65 über, an welches sich ein in Breitenrichtung B bemessenes schmaleres Segment 67 anschließt und an welches wiederum ein in Breitenrichtung B gemessen breiteres Segment 69 anschließt. Ein an das Segment 69 anschließendes Endsegment 71, welches sich hin zum Scheibenabschnitt 61 zunehmend verjüngt, weist eine geradlinig sich erstreckende Außenkontur auf. Die weiteren Segmente 69, 67 und 65 weisen in der beispielhaften Ausführung gekrümmte bzw. gebogene Außenkonturen auf. An wenigstens einem der Segmente 65 bis 71 können quer zur Längserstreckungsrichtung des Stababschnitts 55 orientierte Quernoppen 73 ausgebildet sein, welche das Greifen bzw. Handhaben des Handhabeabschnitts 55 erleichtern.

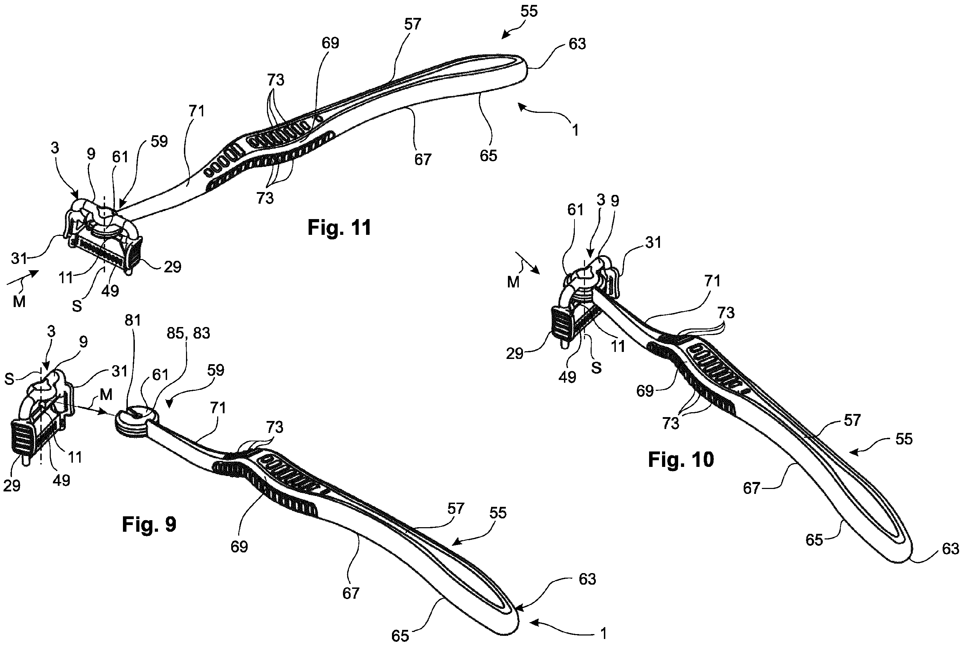

Der Scheibenabschnitt 61, der beispielsweise einen Scheibendurchmesser im Bereich von 1 mm bis 20 mm besitzen kann, weist sich zwei gegenüberliegende vorzugsweise ebene Scheibenoberflächen 75, 77 auf. Beispielsweise ist die in Figur 4 dargestellte Scheibenoberfläche 75 die Oberseite des Scheibenabschnitts 61 und die in Figur 5 dargestellte Scheibenoberfläche 77 die Unterseite des Scheibenabschnitts 61. Ein Umfangsrand 79 des Scheibenabschnitts 61 ist gemäß der beispielhaften Ausführung kreisförmig ausgebildet. Die Gelenkeinrichtung 35 zum schwenkbeweglichen Halten des Trägers 3 an dem Handhabeabschnitt 55 umfasst ferner zwei sich gegenüberliegende Gleitführungsflächen 76, 78, welche gemäß der beispielhaften Ausführung durch die Scheibenoberflächen 75, 77 gebildet sind. Die lineare Montagerichtung M (Fig. 9) des Trägers 3 bezüglich des Handhabeabschnitts 55 ist durch eine sich hin zu einer Einschubmontageposition verjüngende Materialaussparung 81 realisiert, die, wie in Figur 4 abgebildet ist, beispielsweise an der Scheibenoberfläche 75 und/oder der Scheibenoberfläche 77 (Figur 5) angeordnet ist. Die Materialaussparung 81 und die Führungs- bzw. Montagenasen 41, 43 sind vorzugsweise derart dimensioniert, dass die Führungsnasen 41 und/oder 43 beim Aneinandermontieren des Trägers 3 und des Handhabeabschnitts 55 an der Scheibenoberfläche 75 und/oder 77 eingreifen. Die Einschubmontageposition kann beispielsweise durch eine sich in einem Zentrum 83 des Scheibenabschnitts 61 eingebrachte schalenförmige Gelenkaussparung 85 definiert sein, in welche die Führungsnase 41 und/oder 43 in der Einschubmontageposition eingreift. Beispielsweise besitzt die Gelenkaussparung 85 eine schalenförmige Form. Bei Erreichen der Einschubmontageposition, also bei einem Eingriff der Führungsnase 41 und/oder 43 in die jeweils an der Scheibenoberfläche 75 und/oder 77 angebrachte Gelenkaussparung 85, besteht ausschließlich ein Schwenkbewegungsfreiheitsgrad um die Schwenkachse S und ferner ist eine Demontage des Trägers 3 ausschließlich entgegengesetzt der linearen Montagerichtung M von dem Handhabeabschnitt 55 zugelassen.

Die Materialaussparung 81 ist beispielsweise als Rampe ausgebildet, die in der Draufsicht eine V-Form besitzt, und leitet die Führungsnase 41, 43 während der Montage des Trägers 3 an den Handhabeabschnitt 55 kontinuierlich in Richtung der Gelenkaussparung 85. Die Einfahr- bzw. Auffahrrampe 81 besitzt eine bezüglich der linearen Montagerichtung M geneigte Oberfläche 169 besitzen, entlang der die Führungsnase 41, 43 geführt wird. Die Einfahr- bzw. Auffahrrampe 81 weist außerdem zwei gegenüberliegende, sich in Richtung der Gelenkaussparung 85 erstreckende seitliche Führungswände 171, 173 (Rampenseitenwände) auf, die die Rampe 81 seitlich begrenzen und/oder ein seitliches Verlassen der Rampe 81 durch die Führungsnase 41, 43 quer zur linearen Montagerichtung M verhindern. Die Materialaussparung bzw. die Rampe 81 ist in dem scheibenförmigen Gelenkabschnitt 61 des Handhabeabschnitts 55 ausgebildet, und zwar in einer 12-Uhr bzw. 6-Uhr Stellung.

In einer beispielhaften alternativen Ausführung, die nicht dargestellt ist, kann auf die Führungsnasen 41 und/oder 43 verzichtet werden. Dabei sind die Scheibenoberflächen 75, 77 und die Führungsgegenflächen 37, 39ⁱ aufeinander formabgestimmt. Die Scheibenoberflächen 75, 77 können zumindest bereichsweise eine konkave Struktur bzw. Kontur und die Führungsgegenflächen 37, 39 zumindest bereichsweise eine konvexe Struktur bzw. Kontur besitzen, oder umgekehrt. Durch die aufeinander formabgestimmten Oberflächen von Träger 3 und Handhabeabschnitt 55 kann somit der erfindungsgemäße Aspekt des Schwenkbewegungsfreiheitsgrads um die Schwenkachse S auch ohne Führungsnasen 41, 43 und ohne Gelenkaussparung 85 erzeugt werden. Des Weiteren ist es denkbar, dass die Führungsnasen 41, 43 und die Gelenkaussparung 85 zusätzlich zu den konvexen/konkaven Oberflächenstrukturen vorgesehen ist, insbesondere um eine zusätzliche Fixierung des Halters 3 an dem Handhabeabschnitt 55 zu erzeugen.

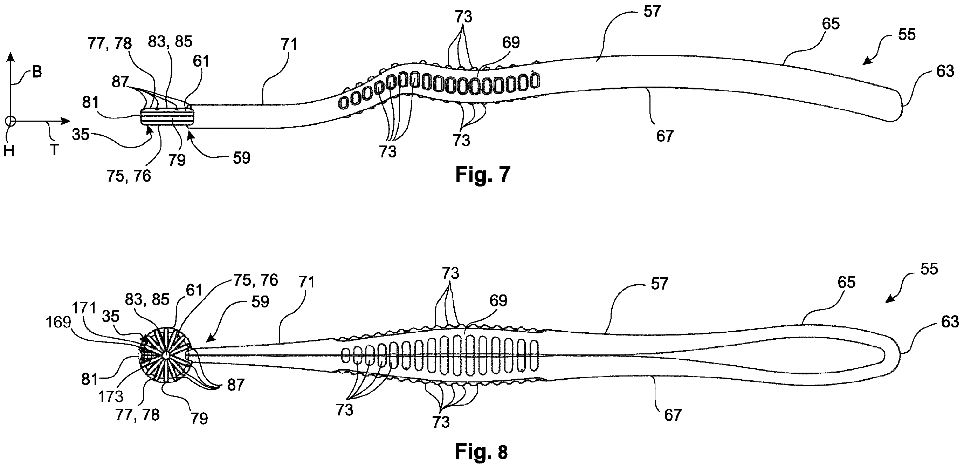

Bezugnehmend auf Figur 5 wird die Schwenkbewegungsmöglichkeit des Trägers 3 bezüglich des Handhabeabschnitts 55 verdeutlicht. Der Träger 3 ist nämlich zwischen wenigstens zwei zueinander winkelversetzten Haltepositionen um die Schwenkachse S relativ zu dem Handhabeabschnitt 55 verschwenkbar. Gemäß Figur 5 sind beispielhaft vier zueinander winkelversetzte Haltepositionen bereitgestellt. Bezugnehmend auf Figur 8 ist eine weitere Ausführungsform des Handhabeabschnitts 55 gezeigt, bei der sieben zueinander winkelversetzte Haltepositionen bereitgestellt sind. Es sei klar, dass auch drei, fünf, sechs, acht oder beispielsweise auch neun Haltepositionen vorgesehen sein können. Um dies zu ermöglichen, sind an wenigstens einer der beiden Scheibenoberflächen 75, 77 wenigstens zwei zueinander bezüglich der Schwenkachse S winkelversetzte Nuten 87 vorgesehen, die jeweils eine Halteposition definieren. Die Nuten 87 sind beispielsweise entlang des vollständigen Scheibendurchmessers des Scheibenabschnitts 61 ausgebildet und derart orientiert, dass die Gelenkaussparung 85 sich innerhalb der Nuten 87 befindet. Die Nuten 87 können beispielsweise halbkugelförmig, kegelförmig oder kegelstumpfförmig geformt sein. Somit teilt die Gelenkaussparung 85 die Nuten 87 in zwei vorzugsweise gleich geformte und dimensionierte Nutabschnitte auf, die gleichmäßig in Umfangsrichtung um die Schwenkachse S zueinander verteilt angeordnet sind. Der Träger 3 und insbesondere die Führungsgegenflächen 37, 39 des Trägers 3 sind derart dimensioniert, dass diese jeweils in die zueinander winkelversetzten Haltepositionen einrasten können. Wenn der Träger 3 eine Halteposition an dem Handhabeabschnitt 55 eingenommen hat, also in einer der Nuten 87 eingerastet ist, ist ein Demontieren des Trägers 3 von dem Handhabeabschnitt 55 längs der linearen Montagerichtung M gesperrt.

In der beispielhaften Darstellung gemäß Figur 6 ist der Scheibenabschnitt 61 im Wesentlichen in Erstreckungsrichtung des Handhabeabschnitts 55, insbesondere parallel zu dem Endsegment 71, orientiert. Es ist jedoch auch denkbar, dass der Scheibenabschnitt 61 in einem Winkel bezüglich der Erstreckungsrichtung des Endsegments 71 an dem Handhabeabschnitt 55 angebracht ist. Beispielsweise können Winkel im Bereich von ± 45° liegen, wobei +45° eine Orientierung des Scheibenabschnitts 61 nach oben in Höhenrichtung H und -45° eine Orientierung des Scheibenabschnitts 61 nach unten in Höhenrichtung H definiert.

Die Seitenansicht gemäß Figur 7 zeigt ein weiteres Ausführungsbeispiel des Handhabeabschnitts 55 und unterscheidet sich von der Seitenansicht des Handhabeabschnitts 55 gemäß der Ausführung in Figur 6 lediglich dadurch, dass der Scheibenabschnitt 61 um 180° gedreht an dem Handhabeabschnitt 55 orientiert ist. Dies bedeutet, dass die Scheibenoberfläche 75, die in Figur 6 nach oben gezeigt hat und ohne Nuten 87 ausgebildet ist, bei der Ausführung gemäß Figur 7 nach unten zeigt.

Der in Figur 9 dargestellte Vormontagezustand des Trägers 3 bezüglich des Handhabeabschnitts 55 verdeutlicht die Montage, insbesondere die Montagerichtung M, der Komponenten zueinander. Bei der Montage des Trägers 3 an den Handhabeabschnitt 55 ist eine vorbestimmte Orientierung von Träger 3 relativ zu dem Handhabeabschnitt 55 einzuhalten. Dabei ist der Träger 3, insbesondere derart bezüglich des Handhabeabschnitts zu orientieren, dass die Ebene, in der der Scheibenabschnitt 61 liegt, sowohl senkrecht bezüglich der Ebene liegt, in der das Abrasivelement 49 liegt, und auch senkrecht zu einer Ebene, die durch eine der beiden Flanken 5, 7 des Trägers 3 verläuft und wiederum senkrecht bezüglich der Ebene des Abrasivelements 49 orientiert ist. Somit ist gewährleistet, dass der Träger 3 die Einschubmontageposition auf dem Handhabeabschnitt 51 einnehmen kann, insbesondere, dass die Führungsnase 41 und/oder 43 mittels der Materialaussparung 81 auf den Handhabeabschnitt 55 aufschiebbar ist und entlang der Materialaussparung 81 in die Gelenkaussparung 85 in dem Scheibenabschnittszentrum 83 einführbar ist.

In Figur 10 ist ein Montagezustand des Trägers 3 an dem Handhabeabschnitt 55 in einer perspektivischen Ansicht des Interdentalinstrument 1 gezeigt. Die Schwenkachse S kreuzt dabei die Gleitführungsflächen 76, 78 sowie die Führungsgegenflächen 37, 39. In den dargestellten beispielhaften Ausführungen steht die Schwenkachse lotrecht auf den Gleitführungs- und Führungsgegenflächen 37, 39, 76, 78. Die Montage des Trägers 3 an dem Handhabeabschnitt 55 kann dabei derart geschehen, dass eine Spreizklemmung oder eine Kompressionsklemmung zwischen den Führungsgegenflächen 37, 39 und den Gleitführungsflächen 76, 78 besteht, sodass die Flächen gegeneinander verspannt sind, vorzugsweise um eine stabile Vorrichtung zu erhalten. Beispielsweise sind die zwei Gleitführungsflächen 76, 78 und die zwei Führungsgegenflächen 37, 39 gegeneinander elastisch derart vorgespannt, sodass eine Schwenkbeweglichkeit des Trägers 3 relativ zu dem Handhabeabschnitt 55 nur in einer vorzugsweise durch die Führungsflächen definierte Schwenkebene realisiert ist. Des Weiteren ist in Figur 10 zu erkennen, dass der Handhabeabschnitt 55 eine Längserstreckungsrichtung aufweist, die im Wesentlichen parallel zu den Führungsflächen 37, 39 sowie 76, 78 ausgerichtet ist, wobei im Wesentlichen parallel dahingehend zu verstehen ist, dass ein Winkel von weniger als 20° der Längserstreckung bezüglich der ebenen Führungsflächen 37, 39, 76, 78 besteht.

Die Klemmarme 9, 11 sind beispielsweise derart geformt und dimensioniert, dass die Scheibenabschnitte 61 des Handhabeabschnitts 55 zwischen den von den Klemmarmen 9, 11 gebildeten Spannraum 13 vorzugsweise unter elastischer Verformung der Klemmarme 9, 11 einschiebbar ist.

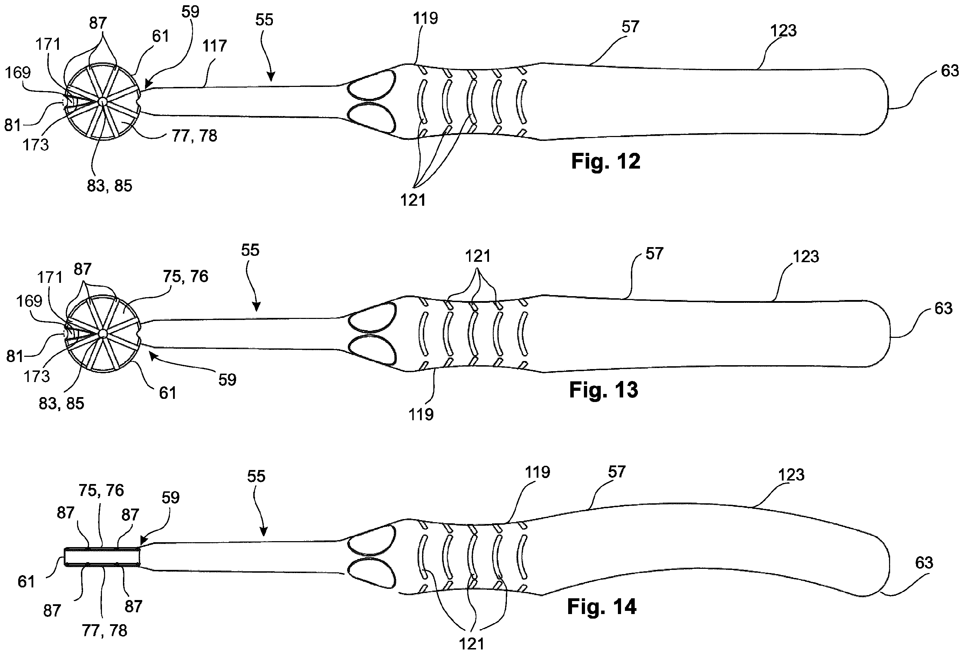

In Bezug auf die Figuren 12 bis 17 wird ein weiteres Ausführungsbeispiel des erfindungsgemäßen Interdentalinstruments 1 beschrieben, wobei bezugnehmend auf die Figuren 12 bis 14 eine weitere beispielhafte Ausführungsform des erfindungsgemäßen Handhabeabschnitts 55 verdeutlicht ist. Die Ausführung des Handhabeabschnitts 55 gemäß der Figuren 12 bis 14 unterscheidet sich von den vorher dargestellten Ausführungen zum Einen dadurch, dass der Scheibenabschnitt 61 beidseitig, d. h. an beiden Scheibenoberflächen 75, 77 mit Nuten 87 und jeweils einer Materialaussparung 81 ausgebildet ist. Beispielsweise ist eine Ausführung mit vier vordefinierten und zueinander winkelversetzten Haltepositionen dargestellt. Alternativ können auch mehr oder weniger Haltepositionen bereitgestellt sein. Es sei klar, wie es auch in Bezug auf Figur 14 dargestellt ist, dass die Scheibenoberflächen 75, 77 deckungsgleich dimensioniert und geformt sein können. Dies bedeutet, dass die jeweiligen Materialaussparungen 81 und die jeweiligen Nuten 87 fluchtend bzw. diametral gegenüberliegen.

Zum Anderen unterscheidet sich die Ausführungsform des Handhabeabschnitts 55 gemäß der Figuren 12 bis 14 durch die Dimensionierung bzw. geometrische Form des Stababschnitts 57, der an den Scheibenabschnitt 61 anknüpft. Unmittelbar angrenzend an den Scheibenabschnitt 61 erstreckt sich ein im Wesentlichen geradliniger Verlängerungsabschnitt 117 konstanten Querschnitts weg von dem Scheibenabschnitt 61. Der Verlängerungsabschnitt 117 mündet in einen querschnittsmäßig größeren Finger-Greifabschnitt 119, der gemäß der Ausführung gemäß den Figuren 12 bis 14 Greifnoppen 121 vorzugsweise aus einem Antirutschmaterial, wie beispielsweise Gummi, besitzt, um ein sicheres Handhaben des Handhabeabschnitts 55 zu gewährleisten und dabei ein Abrutschen der Finger von dem Handhabeabschnitt 55 zu verhindern. Der Finger-Greifabschnitt 119 ist vollständig umlaufend konkav geformt. An den Finger-Greifabschnitt 119 schließt, wie insbesondere in Figur 13 und Figur 12 dargestellt, ein in Unter- bzw. Oberansicht betrachtet, geradliniger Hand-Greifabschnitt 123 konstanten Querschnitts. In Figur 14 ist zu sehen, dass der Hand-Greifabschnitt 123 in einer Seitenansicht auf den Handhabeabschnitt 55 eine gebogene Form besitzt, insbesondere eine nach oben gebogene Form besitzt. Dadurch ist der Handhabeabschnitt 55 ergonomisch vorteilhaft zu greifen bzw. zu handhaben.

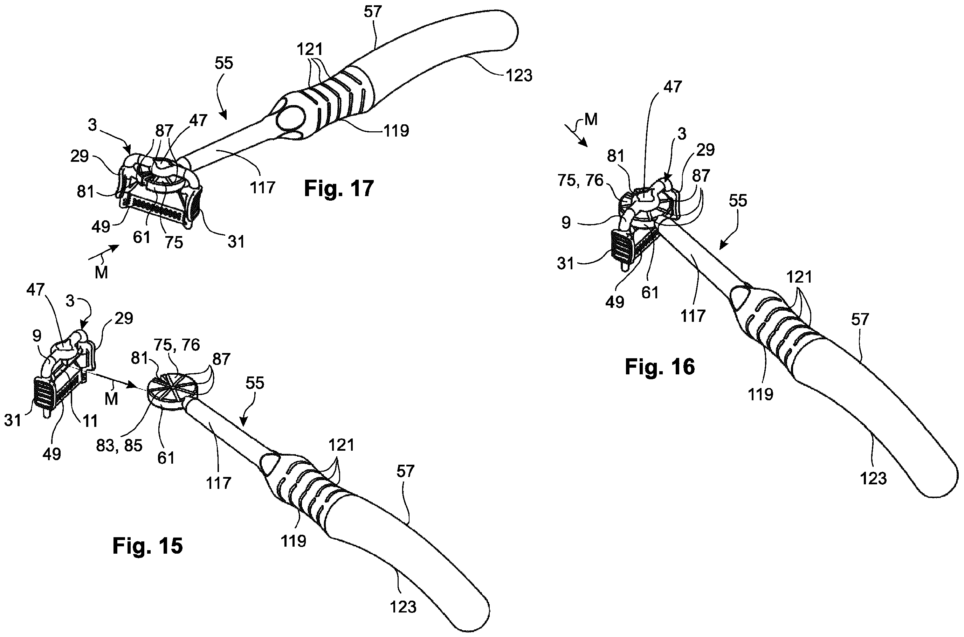

In den Figuren 15 bis 17 ist die Vor- und Montage des Trägers 3 an den Handhabeabschnitt 55 gemäß der Figuren 12 bis 14 abgebildet. Der Montage bzw. der Orientierung des Trägers 3 bezüglich des Handhabeabschnitts 55 liegt dabei derselbe erfindungsgemäße Gedanke wie schon in Bezug auf die Figuren 9 bis 11 erläutert wurde zugrunde. Beispielsweise kreuzt im Montagezustand die Schwenkachse S die Gleitführungsflächen 76, 78 und steht dabei vorzugsweise senkrecht auf diesen. Des Weiteren besitzt die Gelenkeinrichtung 35 einen Montage- / Demontagemechanismus, welcher das Montieren des Trägers 3 an einer einzigen vorbestimmten Einschiebeposition, nämlich der Materialaussparung 81, entlang einer linearen Montagerichtung M zulässt. Bei Erreichen der Einschubmontageposition, d. h. bei der in Figur 16 dargestellten Position, ist ausschließlich ein Schwenkbewegungsfreiheitsgrad um die Schwenkachse S und ein Demontieren des Trägers 3 entgegengesetzt der linearen Montagerichtung M von dem Handhabeabschnitt 55 herunter zugelassen.

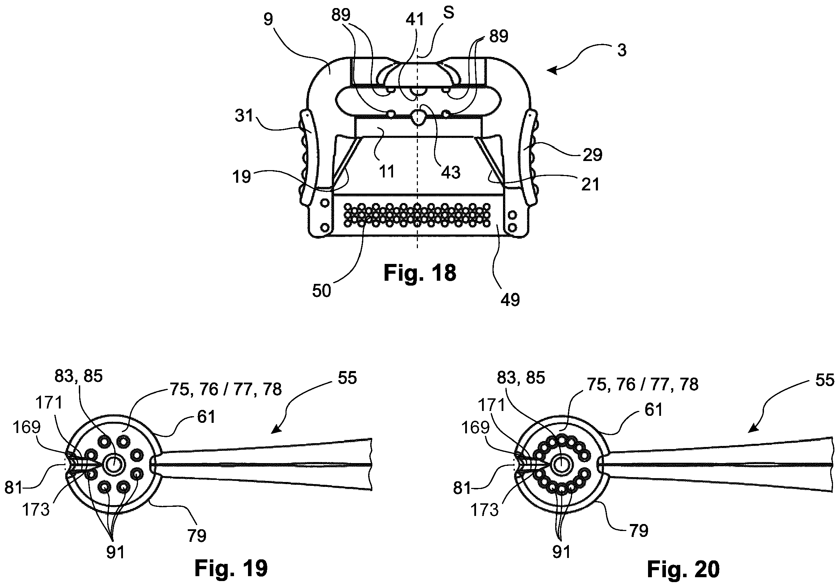

In Bezug auf die Figuren 18 und 19 wird ein weiteres beispielhaftes Ausführungsbeispiel des erfindungsgemäßen Interdentalinstruments 1 beschrieben, wobei in der folgenden Darstellung nur auf die von den vorigen Ausführungsbeispielen der Figuren 1 bis 17 abweichenden Strukturmerkmale eingegangen wird. In Figur 18 ist der Träger 3 gemäß einem Ausführungsbeispiel und in Figur 19 der Handhabeabschnitt 55 gemäß einem Ausführungsbeispiel gebildet. Gemäß dem weiteren Ausführungsbeispiel des Interdentalinstruments 1 weist die Gelenkeinrichtung 35 zusätzlich jeweils eine Verrastung für jede Halteposition des Trägers 3 an dem Handhabeabschnitt 55 auf. Die Verrastung ist beispielsweise durch eine oder mehrere Rastnasen und eine oder mehrere vorzugsweise formkomplementär zu den Rastnasen ausgebildete Rastvertiefungen gebildet, wobei die wenigstens eine Rastnase und/oder wenigstens eine Rastvertiefung in der jeweiligen Gleitführungsfläche 76, 78 und/oder der Führungsgegenfläche 37, 39 angeordnet ist. Beispielsweise sind die Rastnasen 89 an dem Träger 3 angebracht, wobei jeweils zwei Rastnasen 89 von den einander zugewandten an den Klemmarmen 9, 11 ausgebildeten Führungsgegenflächen 37, 39 in Richtung des Spannraums 13 hervorstehen. Beispielsweise sind die jeweils einander zugewandten Rastnasen 89 auf gleicher Höhe bezüglich der Breitenerstreckung des Trägers 3 angeordnet und besitzen vorzugsweise die gleiche geometrische Form und/oder Abmessung. Ferner besitzen die Rastnasen 89 jeweils den gleichen Abstand zu den in der Schwenkachse liegenden Führungs- bzw. Montagenasen 41, 43.

Wie in Figur 19 zu sehen ist, sind die Rastvertiefungen 91 an wenigstens einer der Scheibenabschnittsoberflächen 75, 76 / 77, 78 ausgebildet. Es ist klar, dass die Rastvertiefungen 91 zusätzlich zu den Nuten 87, die in Bezug auf die erste Ausführungsform in den Figuren 4 und 5 beschrieben wurden, vorgesehen sein können. Die Rastvertiefungen 91 sind gemäß der beispielhaften Ausführung nach Figur 19 gleichmäßig in Umfangsrichtung um das Scheibenabschnittszentrum 83 bzw. die Gelenkaussparung 85 angeordnet, wobei jeweils zwei Rastvertiefungen 91 auf einer durch die Gelenkaussparung 85 hindurchgehenden Durchmesserlinie liegen. Die Rastvertiefungen 91 liegen etwa auf halber Strecke des Scheibenradius des Scheibenabschnitts 61. Bei der Ausführung gemäß Figur 8 mit vier zueinander winkelversetzten Haltepositionen sind zwei benachbarte Rastvertiefungen 91 derart in einem Abstand zueinander angeordnet bzw. in Umfangsrichtung derart verteilt angeordnet, dass ein bezüglich des Scheibenabschnittszentrums 83 aufgespannter, durch die beiden Rastvertiefungen 91 definierter Winkelsektor einen Winkel von 45° bildet. Es ist klar, dass der Winkelsektor je nach Anzahl der bereitgestellten Haltepositionen variiert. Beispielweise zeigt die Ausführung gemäß Figur 20 einen Scheibenabschnitt 61 mit sieben zueinander winkelversetzten Haltepositionen, d. h. mit 14 zueinander winkelversetzten Rastvertiefungen 91, wobei klar ist, dass auch mehr oder weniger solcher Rastvertiefungen vorgesehen sein können. Die Rastvertiefungen 91 gemäß Figur 20 sind dabei derart dimensioniert und derart in einem Abstand zueinander angeordnet, dass diese teilweise überlappend zueinander angeordnet sind. Dadurch besteht zwischen zwei benachbarten Rastvertiefungen 91, außer zwischen den jeweils am nächsten zu der Materialaussparung 81 bzw. zu dem Handhabeabschnitt 55 angeordneten Rastvertiefungen 91, kein Materialsteg der Scheibenoberfläche 75, 77 / 76, 78 zwischen diesen, wie es beispielsweise in der Ausführungsform gemäß Figur 19 der Fall ist.

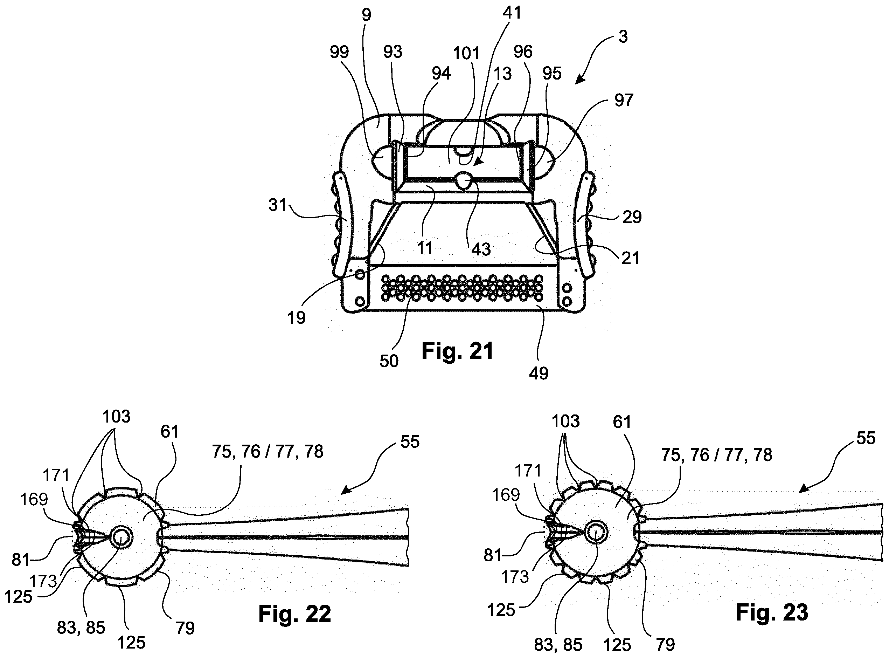

In den Figuren 21 und 22 ist eine weitere Ausführungsform des erfindungsgemäßen Interdentalinstruments 1 abgebildet, wobei Figur 21 den Träger 3 und Figur 22 den Handhabeabschnitt 55 zeigt. Der Träger 3 gemäß unterscheidet sich darin, dass eine zusätzliche Verrastung zum Verrasten des Trägers 3 an dem Handhabeabschnitt 55, ähnlich wie bei dem Ausführungsbeispiel gemäß der Figuren 18 und 19 vorgesehen ist. Gemäß Figur 21 besitzt der Träger 3 zwei, im Spannraum 13 angeordnete, die beiden Klemmarme 9, 11 miteinander verbindende und sich im Wesentlichen parallel zueinander sowie parallel zu den Flanken 3, 5 erstreckende Verrastungsstreben 93, 95. Die Verrastungsstreben 93, 95 sind spiegelverkehrt zueinander angeordnet, sodass jeweils eine Verrastungsfläche 94, 96 der jeweils anderen Verrastungsfläche 96, 94 zugewandt ist. Die Verrastungsstreben 93, 95 können beispielsweise eine dreieckige Querschnittsform besitzen, wobei beispielsweise die Schenkel des vorzugsweise gleichschenkligen Dreiecks einen Winkel von etwa 75° einschließen, wobei auch weitere Winkel, beispielsweise im Bereich von 60° bis 90°, denkbar sind. Gemäß einer beispielhaften Ausführung sind die beiden Verrastungsstreben 93, 95 in einem Abstand von 5 mm bis 20 mm zueinander angeordnet, wobei beispielsweise der Abstand etwa 12 mm beträgt. Wie in Figur 21 zu sehen ist, teilen die Verrastungsstreben 93, 95 den Spannraum 13 in drei Spannraumsegmente auf, wobei außenseitig der Verrastungsstreben 93, 95 spiegelverkehrte, im Wesentlichen gleichgroße Spannraumsegmente 97, 99 liegen und ein sich zwischen den Verrastungsstreben ausbildender Zentralspannraum 101 ergibt.

Gemäß des weiteren Ausführungsbeispiels des erfindungsgemäßen Interdentalinstruments 1 besitzt der Handhabeabschnitt 55 an dem Scheibenabschnitt 61, bzw. an dessen Umfangsrand 79, sich vorzugsweis entlang der vollständigen Scheibenhöhe erstreckende Verrastungskerben 103 auf, in die die Verrastungsstreben 93, 95 zum Einnehmen der Einschubmontageposition einrasten können. Die Verrastungskerben 103 sind beispielsweise in Umfangsrichtung gleichmäßig an dem Umfangsrand 79 verteilt. Insbesondere sind jeweils zwei Verrastungskerben derart an dem Umfangsrand 79 angeordnet, dass die beiden Verrastungskerben 103 auf einer durch die Gelenkaussparung 85 bzw. das Scheibenabschnittszentrum 83 sich hindurch erstreckende Durchmesserlinie liegen. Beispielsweise beträgt ein Winkelsektor zwischen zwei zueinander benachbarten Verrastungskerben 103 ausgehend von dem Schreibenabschnittszentrum 83 etwa 45°, beispielsweise auch etwa 30°, etwa 40° oder etwa 50°. In der Ausführungsform gemäß Figur 22 besitzt der Scheibenabschnitt 61 beispielweise acht Verrastungskerben 103, die somit vier zueinander winkelversetzte Haltepositionen des Trägers 3 auf dem Handhabeabschnitt 55 festlegen. Gemäß einer weiteren Alternative des Handhabeabschnitts 55, die in Figur 23 dargestellt ist, besitzt der Scheibenabschnitt 61 vierzehn Verrastungskerben 103, die somit sieben zueinander winkelversetzte Haltepositionen des Trägers 3 bezüglich des Handhabeabschnitts 55 festlegen. Es sei klar, dass sich zwischen zwei Verrastungskerben 103 jeweils ein sich in Umfangsrichtung erstreckender Umfangsrandabschnitt 125 ausbildet. Ferner ist klar, dass die Größe des Umfangsrandabschnitts 125 bzw. dessen Erstreckung in Umfangsrichtung abhängig von der Anzahl der Verrastungskerben 103 ist. Insbesondere sind die Umfangsrandabschnitte 125 gemäß Figur 22 größer ausgebildet als die Umfangsrandabschnitte 125 gemäß Figur 23. Es ist möglich, dass die Verrastungskerben 103 einen V-förmigen Querschnitt besitzen, wobei beispielsweise die beiden Verrastungskerbenschenkel einen Winkel von etwa 750 einspannen, wobei auch weitere Winkel denkbar sind, beispielsweise im Bereich von 60° bis 90°. Außerdem kann der Querschnitt der Verrastungskerben 103 halbkugelförmig oder oval geformt sein. Es sei klar, dass die Verrastungselemente 95, 93 und 103 bzw. 89 und 91 bzw. 41, 43 und 85 und/oder 87 nach Bedarf miteinander kombinierbar sind, um insbesondere die Schwenkbeweglichkeit bzw. die Verrastung zwischen Träger 3 und Handhabeabschnitt 55 nach Bedarf einzustellen.

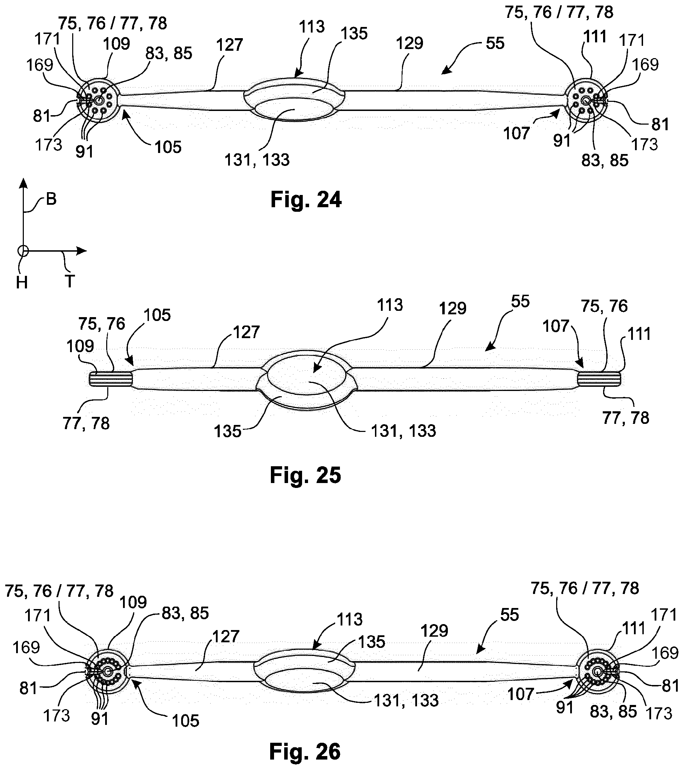

In den Figuren 24 bis 35 sind weitere beispielhafte Ausführungsformen eines erfindungsgemäßen Interdentalinstruments 1 mit einem stabförmigen Handhabeabschnitt 55 zum Greifen des Interdentalinstruments 1 abgebildet, an dessen zwei freien Enden 105, 107 jeweils ein separater Träger 3 anzuordnen ist. Die jeweiligen Gelenkeinrichtungen 35, die zum schwenkbeweglichen Halten der beiden Träger 3 an den an den freien Enden 105, 107 ausgebildeten Scheibenabschnitten 109, 111 des Handhabeabschnitts 55 dienen, können beispielsweise wie in Bezug auf die vorigen Ausführungen ausgeführt wurde, ausgebildet und/oder dimensioniert sein. Insbesondere können die beiden Gelenkeinrichtungen 35 die Verrastungselemente 95, 93 und 103 und/oder 89 und 91 und/oder 41, 43 und 85 und/oder 87 in beliebiger Anzahl aufweisen, um insbesondere die Schwenkbeweglichkeit bzw. die Verrastung zwischen den beiden Trägern 3 und dem Handhabeabschnitt 55 nach Bedarf einzustellen. Im Folgenden werden beispielhafte Ausführungen des erfindungsgemäßen Handhabeabschnitts 55 näher beschrieben, wobei die Beschreibung sich auf die Unterschiede zwischen den jeweiligen Ausführungsformen im Wesentlichen beschränkt.

Der Handhabeabschnitt 55 erstreckt sich gemäß Figur 24 im Wesentlichen kontinuierlich in Breitenrichtung B zwischen den beiden Scheibenabschnitten 109, 111 und besitzt eine im Wesentlichen konstante Querschnittsform.

Etwa mittig weist der Handhabeabschnitt 55 einen in der Draufsicht betrachtet ovalförmigen Greifbereich 113 auf, der das Handhaben und Greifen des Handhabeabschnitts 55 erleichtert und sich in Breitenrichtung B gemessen um etwa 10 % bis 30 % der Gesamtlängserstreckung des Handhabeabschnitts 55 ausbildet und in Tiefenrichtung B gemessen etwa doppelt bis vierfach so breit wie die Breite des stabförmigen Handhabeabschnitts 55 dimensioniert ist. Der Greifbereich 113 kann allerdings auch außermittig an dem Handhabeabschnitt 55 angeordnet sein und den Handhabeabschnitt 55 in zwei in Tiefenrichtung T gemessen unterschiedlich lange Teilabschnitte 127, 129 des Handhabeabschnitts 55 aufteilt. Mit dem Längeren der Teilabschnitte 129, 127 kann ein Benutzer beispielsweise leichter weiter hinten im Mund angeordnete Interdentalräume behandeln, während für die weiter vorne im Mund angeordneten Interdentalräume sich beispielsweise der Kürzere der beiden Teilabschnitte 127, 129 besser eignet. An den freien Enden 105, 107 der Teilabschnitte 127, 129 des Handhabeabschnitts 55 sind jeweils Scheibenabschnitte 109, 111 angeordnet, die gemäß Figur 24 identisch ausgebildet sind. Des Weiteren sind auch die Scheibenoberflächen 75, 77 bzw. deren Gleitführungsflächen 76, 78 identisch ausgebildet. Sämtliche Scheibenoberflächen 75, 77 besitzen die Materialaussparung 81, entlang welcher der jeweilige anzubringende Träger 3 in das Scheibenabschnittszentrum 83, bzw. die Gelenkaussparung 85, einschiebbar ist. Um die zueinander winkelversetzten Haltepositionen für den Träger 3 an dem Handhabeabschnitt 55 bereitzustellen, weisen die Scheibenabschnitte 109, 107 an den Scheibenoberflächen 75, 77 die Rastvertiefungen 91 auf, die, wie in Bezug auf vorigen Beispiele bereits ausgeführt wurde, an den Oberflächen 75, 77 angeordnet sind. Sämtliche in Bezug auf die vorherigen Ausführungsbeispiele beschriebenen Merkmale können auf das in Figur 24 abgebildete Ausführungsbeispiel mit beidseitig des Handhabeabschnitts 55 anzuordnenden Trägern 3 angewendet werden, ohne vom Grundgedanken der Erfindung abzuweichen. Aus den Figuren 24 und 25 ist ersichtlich, dass der Greifbereich 113 zu den Scheibenoberflächen 75, 77 bzw. zu den Gleitführungsflächen 76, 78 in einem Winkel angeordnet ist. Beispielsweise liegt der Winkel im Bereich von 10° bis 80° oder vorzugsweise im Bereich von 20° bis 70°. Eine derartige Neigung des Greifbereichs bezüglich der Scheibenoberflächen und der Gleitführungsflächen 75 bis 78 hat den Vorteil einer besonders ergonomischen Handhabung des erfindungsgemäßen Interdentalinstruments 1. Denn wenn der Benutzer den Handhabeabschnitt 55 vorzugsweise zwischen Daumen und Zeigefinger greift, ist bei einer natürlichen Handhaltung gewährleistet, dass die Scheibenoberflächen und Gleitführungsflächen 75 bis 78 im Wesentlichen horizontal orientiert sind, so dass der Benutzer sich bei der Interdentalbehandlung sich auf diese konzentrieren kann, ohne große Anstrengungen darauf zu richten, dass der Träger 3 und insbesondere das an dem Träger 3 angeordnete Interdentalteil 49 gerade, d.h. im Wesentlichen horizontal, orientiert ist. Der Greifbereich 113 besitzt zwei diametral gegenüberliegende Greifflächen 131, 133, welche von einem abgerundeten Rand 135 insbesondere vollständig umgeben sind. Die Greifflächen 131, 133 sind es vorzugsweise, die bezüglich der Scheibenoberflächen 75, 77 bzw. Gleitführungsflächen 76, 78 in einem Winkel angeordnet sind. Beispielsweise sind die Greifflächen 131, 133 muldenförmig ausgebildet, um definierte und sowohl haptisch als auch optisch von dem Rand 135 sich zu unterscheiden.

Gemäß einer weiteren beispielhaften Ausführung ist statt den Greiferflächen 131, 133 ein Durchgangsloch (nicht dargestellt) beispielsweise mit einem Durchmesser im Bereich von 15 mm bis 20 mm vorgesehen. Dadurch ergibt sich eine besonders vereinfachte und vorteilhafte interdentale Behandlungsmöglichkeit. Beim Anwenden des Interdentalinstruments 1 wird dieses so auf einen Zahn der Zahlenreihe des Patienten aufgesetzt, dass der Bediener beispielsweise mittels seines Zeige-, Mittelfingers oder Daumens durch das Durchgangsloch hindurchgreifen und den Finger auf dem entsprechenden Zahn aufsetzen kann, sodass der entsprechende Finger als eine Art Führungsdrehachse dient, um die das Interdentalteil 1 zur Behandlung der Zahnzwischenräume gedreht werden kann.

Die Ausführungsform gemäß Figur 26 unterscheidet sich von der Ausführungsform gemäß Figur 24 lediglich durch die Anzahl der an den Scheibenoberflächen 75, 77 bzw. Gleitführungsflächen 76, 78 ausgebildeten Rastvertiefungen 91. Während in Figur 24 jeweils acht Rastvertiefungen 91 an einer Scheibenoberfläche 75, 77 vorgesehen sind, weist die Ausführungsform gemäß Figur 26 14 solcher Rastvertiefungen 91 auf, um statt vier zueinander winkelversetzter Haltepositionen, wie in Figur 24, sieben zueinander winkelversetzter Haltepositionen für eine feinere Winkeljustierung des Trägers 3 bezüglich des Handhabeabschnitts 55 zu etablieren.

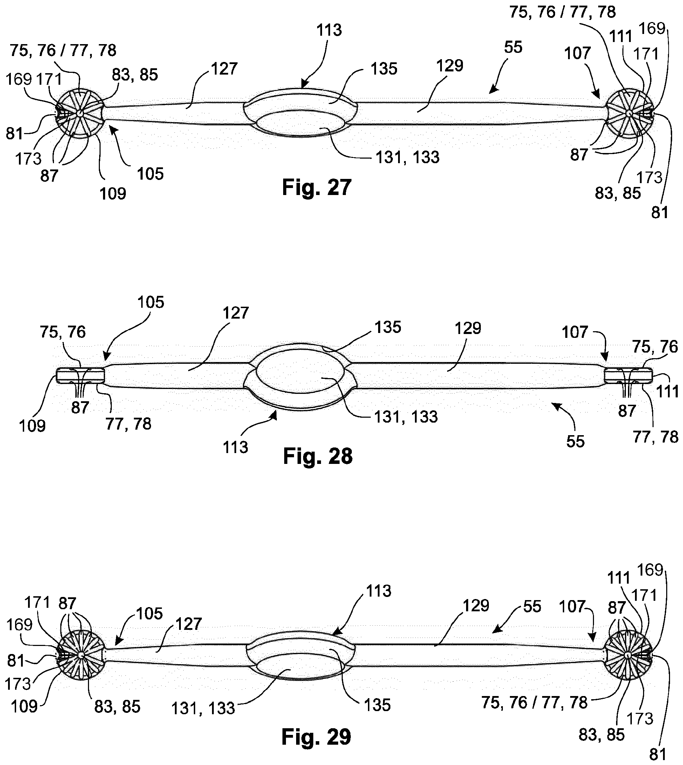

In Bezug auf die Figuren 27 und 28 ist eine weitere Ausführungsform des erfindungsgemäßen Handhabeabschnitts 55 abgebildet, die sich von den Ausführungsformen gemäß Figur 24 bis 26 lediglich dadurch unterscheidet, dass statt den Rastvertiefungen 91 Nuten 87 an den Scheibenoberflächen 75, 77 bzw. den Gleitführungsflächen 76, 78 ausgebildet sind, welche die zueinander winkelversetzten Haltepositionen bereitstellen und welche im Wesentlichen wie bereits in Bezug auf die vorherigen Ausführungen beschriebenen Nuten 87 dimensioniert und orientiert sind. Insbesondere aus Figur 29 ist ersichtlich, dass sowohl die einem Scheibenabschnitt 109 bzw. 111 zugeordneten Scheibenoberflächen 75, 77 als auch die Scheibenoberflächen 75, 77 der beiden diametral gegenüberliegenden Scheibenabschnitte 109, 111 identisch ausgebildet sind.

Bei der Ausführungsform gemäß den Figuren 29 bis 31 handelt es sich erneut um ein Ausführungsbeispiel, bei welchem Nuten 87 an den Scheibenoberflächen 75, 77 vorgesehen sind, um die zueinander winkelversetzten Haltepositionen für den Träger 3 an dem Handhabeabschnitt 55 bereitzustellen. Die Ausführungsform unterscheidet sich von der der Figuren 27 und 28 zum einen dadurch, dass die Nuten 87 nur an jeweils einer der Scheibenoberflächen 75, 77 eines Scheibenabschnitts 109, 111 ausgebildet sind. Beispielsweise weisen die Scheibenoberflächen 75, 77 der zueinander distal angeordneten Scheibenabschnitte 111, 109, welche die Nuten 87 aufweisen, in dieselbe Richtung. Beispielsweise ist jeweils die Scheibenoberseite 75 der beiden Scheibenabschnitte 109, 111 mit Nuten 87 ausgebildet und die jeweiligen Scheibenunterseiten 77 der beiden Scheibenabschnitte 111, 109 ohne Nuten 87 ausgebildet. Des Weiteren unterscheidet sich die Ausführungsform von der der Figuren 27 und 28 dadurch, dass 14 zueinander winkelversetzte Nuten 87 vorgesehen sind, während in Figuren 27 und 28 lediglich acht zueinander winkelversetzte Nuten angebracht sind. Demnach ermöglicht die Ausführungsform gemäß der Figuren 29 bis 31 eine feinere Winkeljustierung des Trägers 3 an dem Handhabeabschnitt 55.

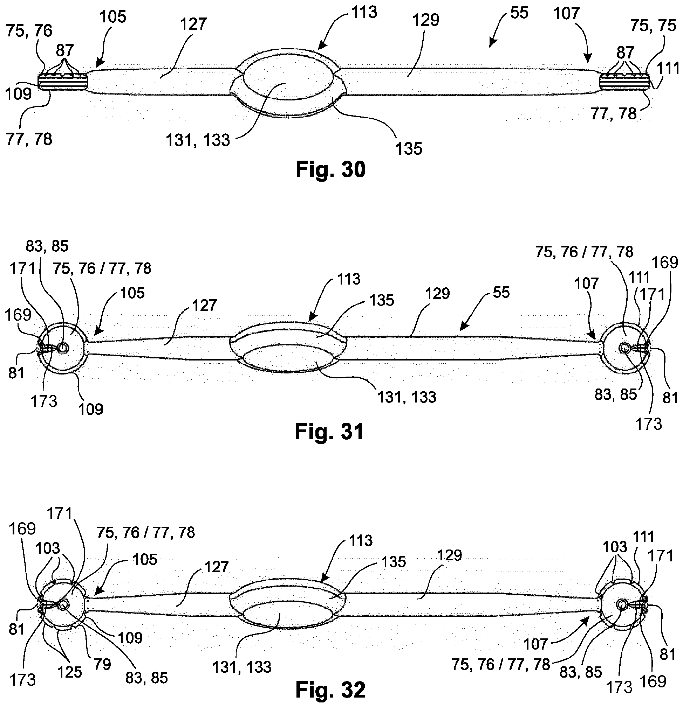

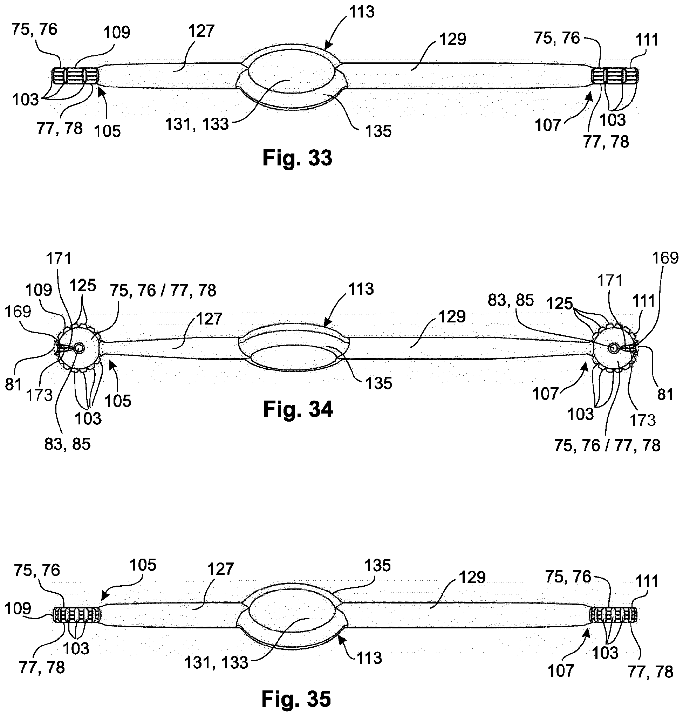

In Bezug auf die Figuren 32 bis 35 sind zwei weitere erfindungsgemäße Ausführungsbeispiele des Handhabeabschnitts 55 abgebildet, wobei sich die eine Ausführungsform (Fig. 32, 33) von der anderen Ausführungsform (Fig. 34, 35) lediglich durch die Anzahl der Verrastungskerben 103, die an dem Umfangsrand 79 des jeweiligen Scheibenabschnitts 109, 111 angeordnet sind, um die zueinander winkelversetzten Haltepositionen des Trägers 3 an dem Handhabeabschnitt 55 zu realisieren. Dabei können die Verrastungskerben 103 wie bereits in Bezug auf die vorhergehenden Ausführungsbeispiele dimensioniert und orientiert sein. In Figur 32 bzw. 33 sind acht zueinander winkelversetzte Verrastungskerben 103 zu Bereitstellung von vier zueinander winkelversetzten Haltepositionen vorgesehen. Bei der Ausführung gemäß Figuren 34 und 35 sind 14 zueinander winkelversetzte Verrastungskerben 103 zur Bereitstellung von sieben zueinander winkelversetzten Haltepositionen vorgesehen.

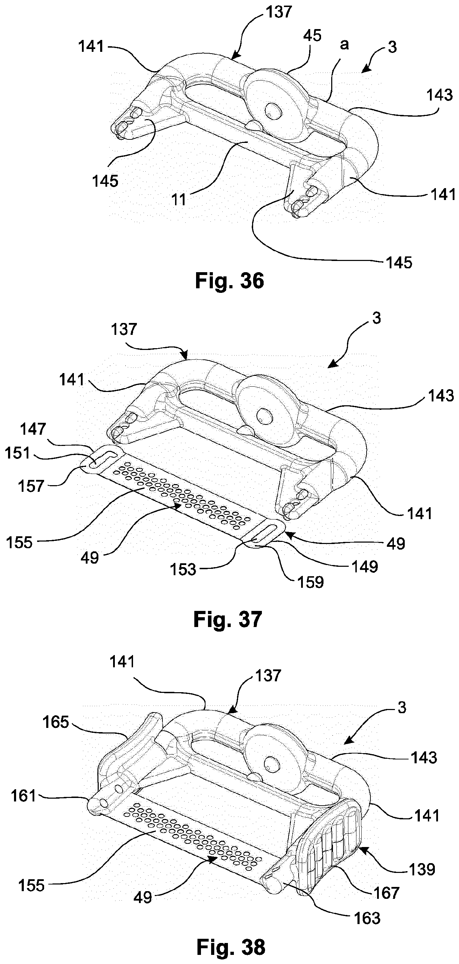

In Bezug auf die Figuren 36 bis 38 wird ein erfindungsgemäßer Träger 3 bzw. insbesondere dessen Herstellung näher erläutert. Zur Vermeidung von Wiederholungen wird in Bezug auf diese Beschreibung lediglich auf die noch nicht aufgeführten Merkmale eingegangen, wobei klar ist, dass der Träger 3 gemäß der Figuren 36 bis 38 ebenfalls gemäß der in Bezug auf die vorhergehenden Ausführungen im Detail ausgeführten Merkmale ausgebildet sein kann. Der Träger 3 umfasst im Wesentlichen zwei Hauptbestandteile, nämlich einen im Wesentlichen U-förmigen Montageabschnitt 137 (Figur 36), der in einem ersten Herstellungsschritt hergestellt wird, und einen Betätigungsabschnitt (Figur 38), der in einem nachgeschalteten Herstellungsschritt hergestellt und an den Montageabschnitt 137 montiert wird.

Der Montageabschnitt 137 besitzt insbesondere in der Draufsicht eine im Wesentlichen Uförmige Gestalt, wobei an den Seiten zwei insbesondere identisch ausgebildete Schenkel 141 sich im Wesentlichen parallel zueinander von einer die beiden Schenkel 141 miteinander verbindenden Montagestruktur 143 erstrecken. Die Schenkel 141 können die in Bezug auf die vorhergehenden Ausführungsbeispiele beschriebenen Flanken 5, 7 bilden. Die Montagestruktur 143 ist insbesondere dazu vorgesehen, den Träger 3 an einen erfindungsgemäßen Handhabeabschnitt 55 eines insbesondere erfindungsgemäßen Interdentalteils 1 anzubringen. Die Montagestruktur 143 kann dabei beispielsweise die Klemmarme 9, 11 sowie die Gelenkeinrichtung 35 aufweisen. Der Montageabschnitt 137 ist durch ein Spritzgussverfahren hergestellt. In Figur 36 ist zu erkennen, dass der gesamte Montageabschnitt 137 in einem Herstellungsschritt, nämlich einem Spritzgussschritt, erzeugt wird, insbesondere mit den Klemmarmen 9, 7 der Gelenkeinrichtung 35, der Scheibe 45 sowie den Führungsnasen 41, 43. Der Träger 3 kann beispielsweise beidseitig an den Schenkeln 141 sich von den Schenkeln 141 schräg in Richtung der Montagestruktur 143, insbesondere in Richtung des unteren Klemmarms 11, Versteifungssegmente 145 aufweisen. Die Versteifungssegmente 145 können zusätzlich oder alternativ zu den Stützflanken 19, 21 (z.B. Figur 1) vorhanden sein und insbesondere kontinuierlich in diese übergehen.

In Bezug auf die Figuren 37 und 38 wird der nachgelagerte Schritt des Anspritzens des Betätigungsabschnitts 139 an den Montageabschnitt 137 verdeutlicht. Zunächst wird das Interdentalteil 49 unterhalb der Schenkel 141 insbesondere kontaktfrei positioniert. Das Interdentalteil ist vorliegend als Abrasivelement ausgebildet und umfasst zwei Flanschabschnitt 147, 149 an den distalen Enden des Abrasivelements 49, die zum Einspannen in den Träger 3 ausgelegt sind. In den Flanschabschnitten 147, 149 ist jeweils eine Materialaussparung 151, 153 vorgesehen, damit in dem nachgelagerten Spritzgussschritt ein Umspritzen mit Trägermaterial, insbesondere Betätigungsabschnittmaterial ermöglicht ist. In Figur 37 ist zu erkennen, dass die eine Materialausnehmung, welche als Langlochausnehmung 151 ausgebildet ist, in Erstreckungsrichtung größer dimensioniert ist, als die andere Materialausnehmung, welche ebenfalls als Langlochausnehmung 153 ausgebildet ist. Ein sich zwischen den Flanschabschnitten erstreckender Abrasivabschnitt 155 zum Behandeln der Interdentalräume des Patienten besitzt eine quer zur Erstreckungsrichtung betrachtet konstante Abmessung, insbesondere Höhe, und geht, wie dargestellt, kontinuierlich in die Flanschabschnitte 147, 149 über. Weiter ist zu erkennen, dass ein die Materialausnehmungen 151, 153 umgebender Flanschabschnittrand 157, 159 in etwa 1 mm beträgt. Die Flanschabschnitte 147, 149 weisen auch eine in Höhenrichtung betrachtet größere Abmessung als der Abrasivabschnitt 155 auf.

Das Interdentalteil 49 wird dabei in Bezug auf den Montageabschnitt 137 des Trägers 3 angeordnet, dass die Flanschabschnitte 147, 149 direkt unterhalb, jedoch insbesondere kontaktfrei, bezüglich der Schenkel 141 positioniert sind. Schließlich wird der Betätigungsabschnitt 139 an dem Montageabschnitt 137 und das Interdentalteil 49 angespritzt. Insbesondere werden die Schenkel 141 des Montageabschnitts 137 und die Flanschabschnitte 147, 149 des Interdentalteils 49 von dem Betätigungsabschnitt 139 umspritzt. Es ist zu erkennen, dass der Betätigungsabschnitt 139 zwei Flanken 161, 163 zum Einspannen des Interdentalteils 49 und zwei Greifer 165, 167, welche beispielsweise wie die Greifabschnitte 29, 31 ausgebildet sein können, umfassen. Die Greifer 165, 167 sind dabei etwa auf Höhe der Schenkel 141 angeordnet und umgeben diese teilweise, d.h. sind wenigstens teilweise um die Schenkel 141 an den Montageabschnitt 137 angespritzt. Durch das zweistufige Spritzgussverfahren entsteht eine Grenzfläche (nicht dargestellt) zwischen den Montageabschnittsschenkeln 141 und den Greifern 165, 167, an welcher die Schenkel 141 und die Greifer 165, 167 in Kontakt miteinander stehen. Ferner sind die Schenkel 141 derart dimensioniert und der Betätigungsabschnitt 139 derart an das Interdentalteil bzw. den Montageabschnitt 137 angespritzt, dass die Montageabschnittsschenkel 141 und die Flanken 161, 163 frei von einer Kontakt-Grenzfläche sind.

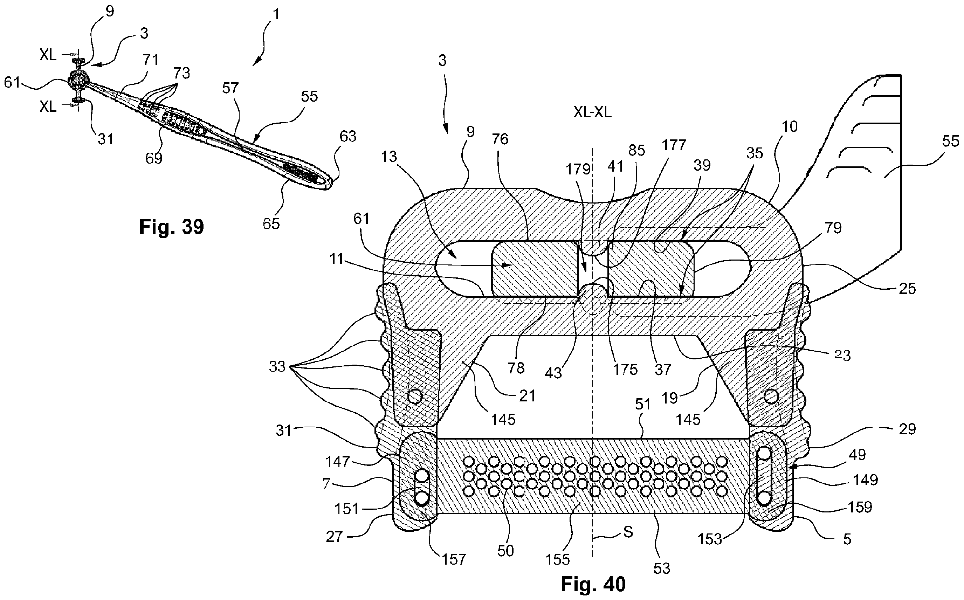

In den Figuren 39 und 40 ist eine weitere beispielhafte Ausführung eines erfindungsgemäßen Interdentalinstruments 1 gezeigt, wobei der Träger 3 an dem Handhabeabschnitt 55 montiert ist. Für die grundsätzliche Ausbildung des Trägers 3 bzw. des Handhabeabschnitts 55 kann auf die vorhergehenden Ausführungen verwiesen werden. Figur 40 zeigt eine Schnittansicht gemäß der Linie XL-XL aus Figur 39, wobei die Schnittlinie den Träger 3 sowie den Scheibenabschnitt 61 des Handhabeabschnitts 55 im Wesentlichen mittig schneidet, sodass die Funktionsweise und die Ausgestaltung der Gelenkeinrichtung 35 verdeutlicht sind. Die Gelenkeinrichtung 35 besitzt zwei in Richtung der Schwenkachse S zueinander versetzt und im Wesentlichen zueinander parallel angeordnete Gleitführungsflächenpaare 37, 78 bzw. 39, 76. Jedes Flächenpaar 37, 78 bzw. 39, 76 bildet sich durch jeweils eine Gleitführungsfläche 76, 78 des Handhabeabschnitts und eine Gleitführungsfläche 37, 39, insbesondere Führungsgegenfläche, des Trägers 3. Auf diese Weise bildet sich eine geteilte Schwenkachse S, bei der zwei voneinander in Richtung der Schwenkachse S beabstandete Schwenkpunkte 175, 177 realisiert sind. Die Schwenkpunkte 175, 177 werden durch die trägerseitigen Vorsprünge bzw. Führungsnasen 41, 43 gebildet. Anders ausgedrückt, erstreckt sich die Schwenkachse S durch den oberen Zinken 9, den Scheibenabschnitt 61 und den unteren Zinken 11.das Weiteren ist zu erkennen, dass die Gelenkaussparung 85 als Durchgangsbohrung 179 realisiert ist, die sich im Wesentlichen koaxial zur Schwenkachse S durch den Scheibenabschnitt 61 hindurch erstreckt. Die beiden Führungsnasen 41, 43 ragen bereichsweise in die Durchgangsbohrung 179 ein, wobei ein Radius der halbkugelförmigen Führungsnasen 41,43 an einen Innenradius der Durchgangsbohrung 179 angepasst ist.

Wie in Figur 40 ferner zu sehen ist, sind die Führungsgegenflächen 37, 39 des Trägers 3 durch die spannraumseitigen Oberflächen der Zinken 9, 11 und die Gleitführungsflächen 76, 78 durch je eine spannraumseitige Scheibenoberfläche 75, 77 des Scheibenabschnitt 61, der in den Spannraum 13 des Trägers 3 eingeschoben ist, des Handhabeabschnitts 55 gebildet. Somit umfasst die Gelenkeinrichtung 35 ein Doppel-Gleitführungsflächen-Paar 37, 78 bzw. 39, 76, also insgesamt vier Führungsflächen, entlang denen der Träger 3 relativ zu dem Handhabeabschnitt 55 bzw. dem Scheibenabschnitt 61 geführt verschwenkt werden kann. Es ist zu erkennen, dass die jeweils einander zugewandten Flächen der Gleitführungsflächenpaare 37, 78 bzw. 39, 76 miteinander im Kontakt sind, also paarweise aufeinander aufliegen, und zwar im Wesentlichen vollflächig bezogen auf die Gleitführungsflächen 76, 78 des Scheibenabschnitt 61.

Die Erfindung ist in den Ansprüchen definiert.

### Bezugszeichenliste

- 1: Interdentalinstrument
- 3: Träger
- 5,7: Flanke
- 9, 11: Klemmarm
- 10: Kreisbogen
- 13: Spannraum
- 15,17: Flankeninnenseite
- 19,21: Stützflanke
- 23: Klemmarmunterseite
- 25,27: Flankenaußenseite
- 29, 31: Greifabschnitt
- 33: Noppe
- 35: Gelenkeinrichtung
- 37,39: Führungsgegenflächen
- 41, 43: Führungsnase
- 45: Scheibe
- 47: Scheibenabschnittoberseite
- 49: Abrasivelement
- 50: Diamantierung
- 51, 53: Abrasivkante
- 54: Abrasiv-/Diamantseite
- 55: Handhabeabschnitt
- 57: Stababschnitt
- 59, 63: freies Ende
- 61: Scheibenabschnitt
- 65, 67, 69, 71: Segment
- 73: Quernoppe
- 75,77: Scheibenoberfläche
- 76, 78: Gleitführungsflächen
- 79: Umfangsrand
- 81: Materialaussparung
- 83: Scheibenabschnittzentrum
- 85: Gelenkaussparung
- 87: Nut
- 89: Rastnase
- 91: Rastvertiefung
- 93, 95: Verrastungsstrebe
- 94, 96: Verrastungsfläche
- 97, 99: Spannraumsegment
- 101: Zentralspannraum
- 103: Verrastungskerbe
- 105, 107: freies Ende
- 109, 111: Scheibenabschnitt
- 113: Greifbereich
- 115, 116: Anzeigeeinrichtung
- 117: Verlängerungsabschnitt
- 119: Finger-Greifabschnitt
- 121: Greifnoppe
- 123: Hand-Greifabschnitt
- 125: Umfangsrandabschnitt
- 127, 129: Teilabschnitt
- 131, 133: Greiffläche
- 135: Rand
- 137: Montageabschnitt
- 139: Betätigungsabschnitt
- 141: Schenkel
- 143: Montagestruktur
- 145: Verstärkungssegment
- 147, 149: Flanschabschnitt
- 151, 153: Materialaussparung
- 155: Abrasivabschnitt
- 157, 159: Flanschabschnittrand
- 161, 163: Flanke
- 165, 167: Greifer
- 169: Rampenoberfläche
- 171, 173: Rampenseitenwand
- 175, 177: Schwenkpunkt
- 179: Durchgangsbohrung

- H: Höhenrichtung
- B: Breitenrichtung
- T: Tiefenrichtung
- S: Schwenkachse
- M: Montagerichtung

## Patentansprüche

1. Interdentalinstrument (1) umfassend:
- einen Handhabeabschnitt (55) zum manuellen Greifen des Interdentalinstruments (1);
- einen von dem Handhabeabschnitt (55) gehaltenen Träger (3), an dem ein Interdentalteil, wie eine Flossette oder ein Abrasivelement (49), angeordnet ist,
- eine Gelenkeinrichtung (35) zum schwenkbeweglichen Halten des Trägers (3) an dem Handhabeabschnitt (55), so dass der Träger (3) relativ zu dem Handhabeabschnitt (55) um eine Schwenkachse (S) zwischen wenigstens zwei zueinander winkelversetzten Haltepositionen verschwenkbar ist, wobei die Gelenkeinrichtung (35) zwei sich gegenüberliegende Gleitführungsflächen (37, 39, 76, 78) aufweist, die jeweils trägerseitig und handhabeabschnittseitig ausgebildet sind,
wobei die Schwenkachse (S) die Gleitführungsflächen (37, 39, 76, 78) kreuzt, wobei ein Ende des Handhabeabschnitts (55) eine Scheibenform aufweist und die sich gegenüberliegenden ebenen Flächen der Scheibe die zwei Gleitführungsflächen (76, 78) bilden, wobei der Träger (3) zwei Klemmarme (9, 11) aufweist, die derart miteinander verbunden sind, dass zwischen den Klemmarmen (9, 11) ein Spannraum (13) gebildet ist, der derart geformt ist, dass das scheibenförmige Ende des Handhabeabschnitts (55) einschiebbar ist.

2. Interdentalinstrument (1) nach Anspruch 1, wobei die Schwenkachse (S) lotrecht auf den Gleitführungsflächen (37, 39, 76, 78) steht und/oder die Gleitführungsflächen (37, 39, 76, 78) plan sind und/oder zueinander parallel verlaufen und/oder unter einer Spreizklemmung oder einer Kompressionsklemmung mit zwei gegenüberliegenden Führungsgegenflächen (37, 39, 76, 78) des Trägers (3) bzw. des Handhabeabschnitts (55) verspannt sind.

3. Interdentalinstrument (1) nach einem der vorstehenden Ansprüche, wobei entlang den zwei Gleitführungsflächen (76, 78) an dem Handhabeabschnitt (55) ein Führungsgegenstück des Trägers (3) beim Verschwenken gleitet, wobei das Führungsgegenstück zwei sich gegenüberliegende Führungsgegenflächen (37, 39) aufweist, die im gleitenden Eingriff mit der jeweiligen Gleitführungsfläche (76, 78) stehen, wobei die zwei Gleitführungsflächen (76, 78) und die zwei, jeweils mit einer der Gleitführungsflächen (76, 78) verspannten Führungsgegenflächen (37, 39) von der Schwenkachse (S) gekreuzt sind.

4. Interdentalinstrument (1) nach einem der vorstehenden Ansprüche, wobei die zwei Gleitführungsflächen (76, 78) und die zwei Führungsgegenflächen (37, 39) gegeneinander insbesondere elastisch derart vorgespannt sind, dass eine Schwenkbeweglichkeit des Trägers (3) relativ zu dem Handhabeabschnitt (55) nur in einer Schwenkebene realisiert ist.

5. Interdentalinstrument (1) nach einem der vorstehenden Ansprüche, wobei der Handhabeabschnitt (55) eine Längserstreckungsrichtung aufweist, die im Wesentlichen parallel zu den zwei Gleitführungsflächen (76, 78), insbesondere zu den zwei Führungsgegenflächen (37, 39), ausgerichtet ist.

6. Interdentalinstrument (1) nach einem der vorstehenden Ansprüche, wobei die Gelenkeinrichtung (35) zusätzlich jeweils eine Verrastung für jede Halteposition des Trägers (3) aufweist, wobei insbesondere beim Schwenken des Trägers (3) in eine Halteposition ein Rastwiderstand zu überwinden ist, wobei insbesondere eine Verrastung durch eine oder mehrere Rastnasen (89) und eine oder mehrere Rastvertiefungen (91) gebildet ist, wobei insbesondere die Rastnasen (89) und die Rastvertiefungen (91) auf die Schwenkbewegung abgestimmt sind, wobei insbesondere die wenigstens eine Rastnase (89) und/oder wenigstens eine Rastvertiefung (91) in der jeweiligen Gleitführungsfläche (76, 78) und gegebenenfalls in der Führungsgegenfläche (37, 39) ausgebildet sind.

7. Interdentalinstrument (1) nach einem der vorstehenden Ansprüche, wobei die Scheibenform einen Scheibendurchmesser von vorzugsweise 1 mm bis 20 mm aufweist, wobei ein Umfangsrand (79) des scheibenförmigen Endes kreisförmig ausgebildet ist und/oder mit Rastnasen (89) und/oder Rastvertiefungen (91) versehen ist, und/oder wobei den Gleitführungsflächen (76, 78) des scheibenförmigen Endes zugewandte Seitenbereiche der Spannarme mit Verrastungselementen versehen sind, die mit Verrastungsgegenelementen an den Führungsgegenflächen (37,39) zusammenwirken.

8. Interdentalinstrument (1) nach einem der vorstehenden Ansprüche, wobei die Gelenkeinrichtung (35) einen Montage-/Demontagemechanismus aufweist, welcher das Montieren des Trägers (3) an einer einzigen vorbestimmten Einschiebeposition entlang einer linearen Montagerichtung (M) zulässt, und wobei bei Erreichen der Einschubmontageposition ausschließlich ein Schwenkbewegungsfreiheitsgrad um die Schwenkachse (S) und ein Demontieren des Trägers (3) entgegengesetzt der linearen Montagerichtung (M) zugelassen ist.

9. Interdentalinstrument (1) nach Anspruch 8, **dadurch gekennzeichnet, dass** die lineare Montagerichtung (M) des Trägers (3) bezüglich des Handhabeabschnitts (55) durch eine sich hin zur Einschubmontageposition verjüngende Materialaussparung (81) an dem Handhabeabschnitt (55) realisiert ist, wobei insbesondere in die Materialaussparung (81) eine Montagenase (41, 43) beim Einschieben in die Einschubmontageposition eingreift, wobei insbesondere die in die Materialaussparung (81) eingreifende Führungsnase bei Erreichen der Einschubmontageposition in eine Gelenkaussparung (85) gelangt, so dass die Schwenkbewegung des Trägers (3) relativ zum Handhabeabschnitt (55) um die Schwenkachse (S) festgelegt ist, und/oder wobei der Träger (3) in die jeweils winkelversetzte Halteposition einrastet, wobei insbesondere in jeder der winkelversetzten Betriebshaltepositionen der Montagemechanismus derart ausgestaltet ist, dass ein Demontieren längs der linearen Montagerichtung (M) gesperrt ist.

10. Interdentalinstrument (1) nach einem der vorstehenden Ansprüche, wobei der Handhabeabschnitt (55) stabförmig ist und zwei freie Enden aufweist;
wobei das Interdentalinstrument (1) zwei separate Träger (3), an denen jeweils ein Interdentalteilangeordnet ist, und eine weitere Gelenkeinrichtung (35) zum schwenkbeweglichen Halten des weiteren Trägers (3) an dem anderen Ende des Handhabeabschnitts (55), so dass der weitere Träger (3) relativ zu dem anderen Ende des Handhabeabschnitts (55) um eine Schwenkachse (S) zwischen wenigstens zwei zueinander winkelversetzten Haltepositionen verschwenkbar ist, umfasst.

11. Interdentalinstrument (1) nach einem der vorstehenden Ansprüche, wobei der Handhabeabschnitt (55)
- einen Stababschnitt (57) mit zwei freien Enden;
- zwei jeweils an einem freien Ende angeordnete Scheibenabschnitte (61) mit jeweils zwei diametral gegenüberliegenden, insbesondere parallelen, Oberflächen zum klemmenden Anbringen je eines Trägers (3), an dem ein Interdentalteil angeordnet ist, an dem Handhabeabschnitt (55); und
- einen an dem Stababschnitt (57) angeordneten Halteabschnitt mit zwei diametral gegenüberliegenden Halteflächen zum manuellen Greifen und Betätigen des Handhabeabschnitts (55), wobei die Halteflächen in einem Winkel von 10° bis 80°, vorzugsweise 20° bis 70° oder 30° bis 60°, bezüglich der Scheibenabschnittoberflächen orientiert sind, umfasst.

12. Interdentalinstrument (1) nach einem der Ansprüche 1 bis 11, wobei das Abrasivelement (49)
- zwei Flanschabschnitte (147, 149) zum Einspannen in dem Träger (3), wobei die Flanschabschnitte (147, 149) jeweils eine Materialaussparung (81), wie eine Langlochausnehmung (151, 153), zum Umspritzen mit Trägermaterial aufweisen; und
- einen sich zwischen den beiden Flanschabschnitten (147, 149) erstreckenden Abrasivabschnitt (155) zum Behandeln von Interdentalräumen, wobei insbesondere der Abrasivabschnitt (155) in einer zur Erstreckungsrichtung querliegenden Höhenrichtung (H) eine konstante Abmessung aufweist; umfasst,
wobei eine Abmessung der Flanschabschnitte (147, 149) in Höhenrichtung (H) wenigstens 1 mm größer als die des Abrasivabschnitts (155) ist und ein Abstand zwischen der Materialaussparung (81) und einem diese umgebenden Flanschabschnittrand (157, 159) wenigstens 1 mm beträgt.

13. Interdentalinstrument (1) nach einem der vorstehenden Ansprüche, wobei der Träger (3)
- einen im Wesentlichen U-förmigen Montageabschnitt (137) mit zwei Montageabschnittschenkeln (141) und einer die beiden Montageabschnittschenkel (141) miteinander verbindenden Montagestruktur (143) zum Anbringen an dem Handhabeabschnitt (55); und
- einen Betätigungsabschnitt (139) mit zwei Flanken (161, 163) zum Einspannen des Interdentalteils und zwei Greifern (165, 167) zum manuellen Greifen des Trägers (3); umfasst,
wobei der Montageabschnitt (137) und der Betätigungsabschnitt (139) derart in einem zweistufigen Spritzgussverfahren hergestellt sind, dass die Montageabschnittschenkel (141) und die Greifer (165, 167) an einer Grenzfläche in Kontakt miteinander sind und die Montageabschnittschenkel (141) und die Flanken (161, 163) frei von einer Kontakt-Grenzfläche sind.

14. Interdentalinstrument nach Anspruch 13, wobei die Montageabschnittschenkel (141) wenigstens teilweise von dem Betätigungsabschnitt (139), insbesondere den Greifern (165, 167), umspritzt sind, wobei insbesondere die Kontakt-Grenzfläche zwischen Montageabschnittschenkel (141) und Greifer (165, 167) wenigstens teilweise an einer Umfangsfläche der Montageabschnittschenkel (141) ausgebildet ist, und/oder wobei eine Längserstreckung der Flanken (161, 163) etwa ein Drittel der Längserstreckung der Montageabschnittschenkel (141) beträgt.

15. Verfahren zum Herstellen eines Interdentalinstruments nach einem der Ansprüche 1 bis 14 wobei bei dem Verfahren:
- ein im Wesentlichen U-förmiger Montageabschnitt (137) des Trägers (3) mit zwei
Montageabschnittschenkeln (141) und einer die beiden Montageabschnittschenkel (141) miteinander verbindenden Montagestruktur (143) zum Anbringen an dem Handhabeabschnitt (55) des Interdentalinstruments (1) in einem Spritzgussverfahren hergestellt wird; und
- ein Betätigungsabschnitt (139) des Trägers (3) mit zwei Flanken (161, 163) zum Einspannen des Interdentalteils und zwei Greifern (165, 167) zum manuellen Greifen des Trägers (3) in einem nachgeschalteten Spritzgussverfahren an die Montageabschnittschenkel (141) angespritzt wird,
wobei insbesondere ferner der Betätigungsabschnitt (139) in dem nachgeschalteten Spritzgussverfahrensschritt hergestellt wird und/oder der Betätigungsabschnitt (139) an den Montageabschnitt (137) und das Interdentalteil derart angespritzt wird, dass die Greifer (165, 167) an die Montageabschnittschenkel (141) und die Flanken (161, 163) an das Interdentalteil angespritzt werden.

## Claims

1. Interdental instrument (1) comprising:
- a handling section (55) for manually gripping the interdental instrument (1);
- a carrier (3) held by the handling section (55), on which an interdental part, such as a flossette or an abrasive element (49), is arranged,
- a joint device (35) for pivotally holding the carrier (3) on the handling section (55), so that the carrier (3) can be pivoted relative to the handling section (55) about a pivot axis (S) between at least two holding positions which are offset at an angle to one another, the joint device (35) having two mutually opposite sliding guide surfaces (37, 39, 76, 78) which are each formed on the carrier side and on the handling section side,
wherein the pivot axis (S) crosses the sliding guide surfaces (37, 39, 76, 78), wherein one end of the handling section (55) has a disc shape and the opposing flat surfaces of the disc form the two sliding guide surfaces (76, 78), wherein the carrier (3) has two clamping arms (9, 11) that are connected to one another in such a way that a clamping space is formed between the clamping arms (9, 11), which clamping space is shaped in such a way that the disc-shaped end of the handling section (55) can be pushed in.

2. Interdental instrument (1) according to claim 1, wherein the pivot axis (S) is perpendicular to the sliding guide surfaces (37, 39, 76, 78) and/or the sliding guide surfaces (37, 39, 76, 78) are planar and/or extend parallel to one another and/or are clamped with two opposing guide counter-surfaces (37, 39, 76, 78) of the carrier (3) or of the handling section (55) under an expansion clamping or a compression clamping.

3. Interdental instrument (1) according to one of the preceding claims, wherein along the two sliding guide surfaces (76, 78) on the handling section (55) a guide counterpart of the carrier (3) slides during pivoting, wherein the guide counterpart has two opposing guide surfaces (37, 39) which are in sliding engagement with the respective sliding guide surface (76, 78), wherein the two sliding guide surfaces (76, 78) and the two guide counter-surfaces (37, 39), each of which is clamped to one of the sliding guide surfaces (76, 78), are crossed by the pivot axis (S).

4. Interdental instrument (1) according to one of the preceding claims, wherein the two sliding guide surfaces (76, 78) and the two guide counter-surfaces (37, 39) are pretensioned against each other, in particular elastically, in such a way that a pivoting mobility of the carrier (3) relative to the handling section (55) is realized only in one pivoting plane.

5. Interdental instrument (1) according to any one of the preceding claims, wherein the handling section (55) has a longitudinal extension direction which is oriented substantially parallel to the two sliding guide surfaces (76, 78), in particular to the two guide counter-surfaces (37, 39).

6. Interdental instrument (1) according to one of the preceding claims, wherein the joint device (35) additionally has in each case a latch for each holding position of the carrier (3), wherein in particular when the carrier (3) is pivoted into a holding position a latch resistance has to be overcome, wherein in particular a latch is formed by one or more latching lugs (89) and one or more latching recesses (91), wherein in particular the latching lugs (89) and the latching recesses (91) are matched to the pivoting movement, wherein in particular the at least one latching lug (89) and/or at least one latching recess (91) are formed in the respective sliding guide surface (76, 78) and optionally in the guide counter-surface (37, 39).

7. Interdental instrument (1) according to one of the preceding claims, wherein the disc shape has a disc diameter of preferably 1 mm to 20 mm disc, wherein a circumferential edge (79) of the disc-shaped end is circular and/or is provided with latching lugs (89) and/or latching recesses (91), wherein side regions of the clamping arms facing the sliding guide surfaces (76, 78) of the disc-shaped end are provided with latching elements which cooperate with latching counter-elements on the guide counter-surfaces (37, 39).

8. Interdental instrument (1) according to any of the preceding claims, wherein the joint device (35) has a mounting/dismounting mechanism which permits mounting of the carrier (3) at a single predetermined insertion position along a linear mounting direction (M), and wherein upon reaching the insertion mounting position, only one degree of freedom of pivotal movement about the pivot axis (S) and dismounting of the carrier (3) in the opposite direction to the linear mounting direction (M) is permitted.

9. Interdental instrument (1) according to claim 8, **characterized in that** the linear mounting direction (M) of the carrier (3) with respect to the handling section (55) is realized by a material recess (81) tapering towards the insertion mounting position on the handling section, wherein in particular a mounting lug (41, 43) engages in the material recess (81) during insertion into the insertion mounting position, wherein in particular the guide lug engaging in the material recess (81), upon reaching the insertion mounting position, enters a joint recess (85), so that the pivoting movement of the carrier (3) relative to the handling section (55) about the pivot axis (S) is fixed and/or wherein the carrier (3) engages in the respective angularly offset holding position, wherein in particular in each of the angularly offset operating holding positions the mounting mechanism is designed in such a way that disassembly along the linear mounting direction (M) is blocked.

10. Interdental instrument (1) according to any of the preceding claims, wherein the handling section (55) is rod-shaped and has two free ends; wherein the interdental instrument (1) comprises two separate carriers (3), on each of which an interdental part is arranged; and a further joint device (35) for pivotally holding the further carrier (3) at the other end of the handling section (55), so that the further carrier (3) can be pivoted relative to the other end of the handling section (55) about a pivot axis (S) between at least two mutually angularly offset holding positions.

11. Interdental instrument (1) according to one of the preceding claims, wherein the handling section (55) comprises:
- a rod section (57) having two free ends;
- two disc sections (61), each arranged at a free end and each having two diametrically opposite, in particular parallel, surfaces for the clamping attachment of a respective carrier (3), on which an interdental part is arranged, to the handling section (55); and
- a holding section arranged on the rod section (57) and having two diametrically opposed holding surfaces for manually gripping and actuating the handling section (55), the holding surfaces being oriented at an angle of 10° to 80°, preferably 20° to 70° or 30° to 60°, with respect to the disc section surfaces.

12. Interdental instrument (1) according to one of claims 1 to 11, wherein the abrasive element (49) comprises:
- two flange sections (147, 149) for clamping in the carrier (3) wherein the flange sections (147, 149) each have a material recess (81), such as an elongated hole recess (151, 153), for overmolding with carrier material; and
- an abrasive section (155) extending between the two flange sections (147, 149) for treating interdental spaces, wherein in particular the abrasive section (155) has a constant dimension in a height direction (H) transverse to the direction of extension;
wherein a dimension of the flange sections (147, 149) in the height direction (H) is at least 1 mm larger than that of the abrasive section (155), and a distance between the material recess (81) and a flange section edge (157, 159) surrounding it is at least 1 mm.

13. Interdental instrument (1) according to one of the preceding claims, wherein the carrier (3) comprises:
- a substantially U-shaped mounting section (137) having two mounting section legs (141) and a mounting structure (143) interconnecting the two mounting section legs (141) for attachment to the handling section (55); and
- an actuating section (139) with two flanks (161, 163) for clamping the interdental part and two grippers (165, 167) for manually gripping the carrier (3);
wherein the mounting section (137) and the actuating section (139) are formed in a twostage injection molding process such that the mounting section legs (141) and the grippers (165, 167) are in contact with each other at an interface, and the mounting section legs (141) and the flanks (161, 163) are free of a contact interface.

14. Interdental instrument (1) according to claim 13, wherein the mounting section legs (141) are at least partially overmolded by the actuating section (139), in particular the grippers (165, 167), wherein in particular the contact interface between the mounting section legs (141) and the grippers (165, 167) is at least partially formed on a circumferential surface of the mounting section legs (141), and/or wherein a longitudinal extension of the flanks (161, 163) is about one third of the longitudinal extension of the mounting section legs (141).

15. Method for manufacturing an interdental instrument (1) according to one of claims 1 to 14, wherein for the method:
- a substantially U-shaped mounting section (137) of the carrier (3) having two mounting section legs (141) and a mounting structure (143) interconnecting the two mounting section legs (141) for attachment to the handling section (55) of the interdental instrument (1) is manufactured in an injection molding process; and
- an actuating section (139) of the carrier (3) having two flanks (161, 163) for clamping the interdental part and two grippers (165, 167) for manually gripping the carrier (3) is molded onto the mounting section legs (141) in a downstream injection molding process, wherein in particular the actuating section (139) is manufactured in the downstream injection molding step and/or the actuating section (139) is molded to the mounting section (137) and the interdental member such that the grippers (165, 167) are molded to the mounting section legs (141) and the flanks (161, 163) are molded to the interdental member.

## Revendications

1. Instrument interdentaire (1) comprenant :
- une partie de manipulation (55) pour la préhension manuelle de l'instrument interdentaire (1) ;
- un support (3) maintenu par la partie de manipulation (55), sur lequel est placée une pièce interdentaire, telle qu'une flossette ou un élément abrasif (49),
- un système d'articulation (35), destiné à maintenir de manière mobile en pivotement le support (3) sur la partie de manipulation (55), de telle sorte que le support (3) soit susceptible de pivoter par rapport à la partie de manipulation (55) autour d'un axe de pivotement (S) entre au moins deux positions de maintien à angles déportés l'un par rapport à l'autre, le système d'articulation (35) comportant deux surfaces de guidage en coulissement (37, 39, 76, 78) mutuellement opposées, qui sont conçues respectivement du côté support et du côté partie de manipulation,
l'axe de pivotement (S) croisant les surfaces de guidage en coulissement (37, 39, 76, 78), une extrémité de la partie de manipulation (55) présentant la forme d'un disque et les surfaces planes mutuellement opposées du disque constituant les deux surfaces de guidage en coulissement (76, 78), le support (3) comportant deux bras de serrage (9, 11) qui sont assemblés l'un à l'autre, de telle sorte qu'entre les bras de serrage (9, 11) soit conçu un espace tenseur (13) qui est façonné de telle sorte que l'extrémité en forme de disque de la partie de manipulation (55) soit emboîtable.

2. Instrument interdentaire (1) selon la revendication 1, l'axe de pivotement (S) étant debout d'aplomb sur les surfaces de guidage en coulissement (37, 39, 76, 78) et / ou les surfaces de guidage en coulissement (37, 39, 76, 78) étant planes et / ou s'écoulant à la parallèle l'une de l'autre et / ou étant contraintes par un serrage par écartement ou par un serrage par compression avec deux surfaces de guidage antagonistes (37, 39, 76, 78) du support (3) ou de la partie de manipulation (55).

3. Instrument interdentaire (1) selon l'une quelconque des revendications précédentes, lors du pivotement, une pièce antagoniste de guidage du support (3) coulissant sur la partie de manipulation (55), le long des deux surfaces de guidage en coulissement (76, 78), la pièce antagoniste de guidage comportant deux surfaces de guidage antagonistes (37, 39) mutuellement opposées, qui sont en engagement coulissant avec la surface de guidage en coulissement (76, 78) concernée, les deux surfaces de guidage en coulissement (76, 78) et les deux surfaces de guidage antagonistes (37, 39) respectivement contraintes avec l'une des surfaces de guidage en coulissement (76, 78) étant croisées par l'axe de pivotement (S).

4. Instrument interdentaire (1) selon l'une quelconque des revendications précédentes, les deux surfaces de guidage en coulissement (76, 78) et les surfaces de guidage antagonistes (37, 39) étant contraintes l'une contre l'autre notamment de manière élastique, de telle sorte qu'une mobilité en pivotement du support (3) par rapport à la partie de manipulation (55) ne soit réalisée que dans un plan de pivotement.

5. Instrument interdentaire (1) selon l'une quelconque des revendications précédentes, la partie de manipulation (55) présentant une direction d'extension longitudinale qui est orientée sensiblement à la parallèle des deux surfaces de guidage en coulissement (76, 78), notamment des deux surfaces de guidage antagonistes (37, 39).

6. Instrument interdentaire (1) selon l'une quelconque des revendications précédentes, le système d'articulation (35) comportant additionnellement chaque fois un enclenchement pour chaque position de maintien du support (3), notamment lors du pivotement du support (3) dans une position de maintien, une résistance à l'enclenchement devant être surmontée, notamment un enclenchement étant constitué par un ou plusieurs ergots d'encliquetage (89) et un ou plusieurs creux d'encliquetage (91), notamment les ergots d'encliquetage (89) et les creux d'encliquetage (91) étant adaptés au mouvement en pivotement, notamment l'au moins un ergot d'encliquetage (89) et / ou l'au moins un creux d'encliquetage (91) étant conçu dans la surface de guidage en coulissement (76, 78) respective et le cas échéant dans la surface de guidage antagoniste (37, 39).

7. Instrument interdentaire (1) selon l'une quelconque des revendications précédentes, la forme de disque présentant un diamètre de disque, de préférence de 1 mm à 20 mm, un bord périphérique (79) de l'extrémité en forme de disque étant conçu de forme circulaire et / ou étant muni d'ergots d'encliquetage (89) et / ou de creux d'encliquetage (91), et / ou les zones latérales des bras de serrage qui font face aux surfaces de guidage en coulissement (76, 78) de l'extrémité en forme de disque étant munis d'élément d'enclenchement qui coopèrent avec les éléments d'enclenchement antagonistes sur les surfaces de guidage antagonistes (37, 39).

8. Instrument interdentaire (1) selon l'une quelconque des revendications précédentes, le système d'articulation (35) comportant un mécanisme de montage / de démontage, lequel admet le montage du support (3) sur une seule position d'emboîtement prédéfinie le long d'une direction de montage (M) linéaire, et à l'atteinte de la position de montage par emboîtement, exclusivement un niveau de liberté de mouvement pivotant autour de l'axe de pivotement (S) et un démontage du support (3) à l'opposée de la direction de montage (M) linéaire étant admis.

9. Instrument interdentaire (1) selon la revendication 8, **caractérisé en ce que** la direction de montage (M) linéaire du support (3) par rapport à la partie de manipulation (55) est réalisée par un évidement de matière (81) s'effilant en direction de la position de montage par emboîtement sur la partie de manipulation (55), notamment un bec de montage (41, 43) s'engageant dans l'évidement de matière (81) lors de l'emboîtement dans la position de montage par emboîtement, à l'atteinte de la position de montage par emboîtement, notamment le bec de guidage qui s'engage dans l'évidement de matière (81) arrivant dans une encoche d'articulation (85), de telle sorte que le mouvement de pivotement du support (3) par rapport à la partie de manipulation (55) autour de l'axe de pivotement (S) soit fixé, et / ou le support (3) s'enclenchant dans la position de maintien à angle respectivement déporté, notamment dans chacune des positions de maintien en service à angle respectivement déporté, le mécanisme de montage étant conçu de telle sorte qu'un démontage le long de la direction de montage (M) linéaire soit bloqué.

10. Instrument interdentaire (1) selon l'une quelconque des revendications précédentes, la partie de manipulation (55) étant en forme de barre et comportant deux extrémités libres ;
l'instrument interdentaire (1) comprenant deux supports (3) séparés, sur chacun desquels est placée une pièce interdentaire et un système d'articulation (35) supplémentaire, pour le maintien mobile en pivotement du support (3) supplémentaire sur l'autre extrémité de la partie de manipulation (55), de telle sorte que le support (3) supplémentaire soit susceptible de pivoter par rapport à l'autre extrémité de la partie de manipulation (55) autour d'un axe de pivotement (S) entre au moins deux positions de maintien à angle mutuellement déporté l'un par rapport à l'autre.

11. Instrument interdentaire (1) selon l'une quelconque des revendications précédentes, la partie de manipulation (55) comprenant
- une partie en barre (57), pourvue de deux extrémités libres ;
- deux parties en disque (61), placées chacune sur une extrémité libre, présentant chacune deux surfaces diamétralement opposées, notamment parallèles, destinées à monter chaque fois par serrage un support (3), sur lequel est placée une pièce interdentaire, sur la partie de manipulation (55) ; et
- une partie de maintien placée sur la partie en barre (57), pourvue de deux surfaces de maintien diamétralement opposées, pour la préhension et la manoeuvre manuelles de la partie de manipulation (55), les surfaces de maintien étant orientées sous un angle de 10° à 80°, de préférence de 20° à 70° ou de 30° à 60° par rapport aux surfaces des parties en disques.

12. Instrument interdentaire (1) selon l'une quelconque des revendications 1 à 11, l'élément abrasif (49) comprenant
- deux parties en brides (147, 149), destinées à être enserrées dans le support (3), les parties en brides (147, 149) comportant chacune un évidement de matière (81), tel qu'une cavité en trou oblong (151, 153), qui doit être surmoulée d'une matière de support ; et
- une partie abrasive (155) s'étendant entre les deux parties en brides (147, 149), destinée à traiter des espaces interdentaires, notamment la partie abrasive (155) présentant une dimension constante dans une direction en hauteur (H) transversale à la direction d'extension,
une dimension des parties en brides (147, 149) dans la direction en hauteur (H) étant supérieure d'au moins 1 mm à celle de la partie abrasive (155) et un écart entre l'évidement de matière (81) et un bord (157, 159) de partie en bride qui entoure celui-ci étant d'au moins 1 mm.

13. Instrument interdentaire (1) selon l'une quelconque des revendications précédentes, le support (3) comprenant
- une partie de montage (137) sensiblement en forme de U, pourvue de deux branches (141 de partie de montage et d'une structure de montage (143) assemblant l'une à l'autre les deux branches (141) de partie de montage, destinée à être montée sur la partie de manipulation (55) ; et
- une partie de manoeuvre (139) pourvue de deux flancs (161, 163), pour y enserrer la pièce interdentaire et de deux préhenseurs (165, 167) pour la préhension manuelle du support (3) ;
la partie de montage (137) et la partie de manoeuvre (139) étant fabriquées par procédé de moulage par injection en deux étapes, de telle sorte que les branches (141) de partie de montage et les préhenseurs (165, 167) soient en contact mutuel sur une surface limite et que les branches (141) de partie de montage et les flancs (161, 163) soient exempts d'une surface limite de contact.

14. Instrument interdentaire selon la revendication 13, les branches (141) de partie de montage étant surmoulées au moins partiellement par la partie de manoeuvre (139), notamment par les préhenseurs (165, 167), notamment les surfaces limites de contact entre les branches (141) de partie de montage et les préhenseurs (165, 167) étant conçues au moins partiellement sur une surface périphérique des branches (141) de partie de montage, et / ou une extension longitudinale des flancs (161, 163) s'élevant à environ un tiers de l'extension longitudinale des branches (141) de partie de montage.

15. Procédé, destiné à fabriquer un instrument interdentaire selon l'une quelconque des revendications 1 à 14,
lors du procédé :
- une partie de montage (137) sensiblement en forme de U du support (3) pourvue de deux branches (141) de partie de montage et d'une structure de montage (143) assemblant l'une à l'autre les deux branches (141) de partie de montage, destinée à être montée sur la partie de manipulation (55) de l'instrument interdentaire (1) étant fabriquée lors d'un procédé de moulage par injection ; et
- une partie de manoeuvre (139) du support (3), pourvue de deux flancs (161, 163), destinés à enserrer la pièce interdentaire et de deux préhenseurs (165, 167) pour la préhension manuelle du support (3) étant surmoulée sur branches (141) de partie de montage dans un procédé de moulage par injection en aval,
notamment par ailleurs, la partie de manoeuvre (139) étant fabriquée lors de l'étape de procédé de moulage par injection en aval et/ ou la partie de manoeuvre (139) étant surmoulée sur la partie de montage (137) et sur la pièce interdentaire, de telle sorte que les préhenseurs (165, 167) soient surmoulés sur les branches (141) de partie de montage et les flancs (161, 163) soient surmoulés sur la pièce interdentaire.
